# EUROPEAN PATENT SPECIFICATION

(11) **EP 2 399 296 B1**
(45) Date of publication and mention of the grant of the patent: **02.12.2015**
(21) Application number: 10744485.3
(22) Date of filing: 23.02.2010
(51) Int. Cl.: F24J 2/10, H01L 31/042, F24J 2/52, F24J 2/16, F24J 2/46

(54) **HIGHLY EFFICIENT RENEWABLE ENERGY SYSTEM**
HOCHLEISTUNGSSYSTEM FÜR ERNEUERBARE ENERGIE
SYSTÈME À ÉNERGIE RENOUVELABLE EXTRÊMEMENT EFFICACE

(30) Priority: 23.02.2009 US 154587 P; 11.12.2009 US 285801 P; 05.02.2010 US 301950 P; 12.08.2009 US 233354 P; 17.09.2009 US 243400 P
(43) Date of publication of application: 28.12.2011
(73) Proprietor: Tenksolar, Inc., Bloomington, MN 55431 (US)
(72) Inventor: MEYER, Dallas, W., Prior Lake MN 55372 (US); BERG, Lowell, J., Eden Prairie MN 55347 (US); MURNAN, Thomas, L., Bloomington MN 55437 (US); DODD, Orville, D., Minneapolis MN 55417 (US)
(74) Representative: Maikowski & Ninnemann
(86) International application number: PCT/US2010/025108
(87) International publication number: WO 2010/096833

(56) References cited:
- DE-U1-202006 020 180
- JP-A- 2002 314 112
- KR-A- 20070 104 300
- US-A- 4 020 827
- US-A- 5 538 563
- US-A1- 2008 029 149
- US-A1- 2008 029 149
- US-A1- 2008 164 766

## Description

### BACKGROUND

### 1. The Field of the Invention

The present invention relates generally to solar energy production. More particularly, some example embodiments relate to a solar energy system including a pluraliy of photovoltaic ("PV") modules.

### 2. The Relevant Technology

Reducing the cost of solar energy is critical to ensure it reaches a level of competitiveness with fossil fuels and other conventional energy generation methods. Many approaches are being pursued to increase the efficiency of the PV material implemented within PV modules and thereby decrease its cost. This includes high magnification non-focusing devices and lower magnification concentrators. Both generally use single or dual axis tracking systems to maintain alignment, and both require complex shaping and forming of optical elements to reflect the light onto the PV modules.

Flat large area reflectors can also be used by reflecting light onto a flat plat PV module. This approach is not suitable for conventional PV modules which include series-connected PV cells that limit the ability of the PV module to realize any power gain under non-uniform lighting conditions. Additionally, the reflectors have to be carefully positioned and/or designed to avoid creating optical hazards, such as potentially blinding reflections and/or concentration of reflected light on remote and potentially combustible objects.

In addition, some commercial applications involve the installation of an array of PV modules and/or reflectors on a roof of a building or other pre-existing structure, or on the ground. In latitudes greater than 20 degrees, the PV modules require some level of orientation towards the sun to achieve optimum performance. In addition, because the PV modules cannot tolerate non-uniform illumination such as shading from adjacent PV modules, the PV modules have to be relatively widely spaced between rows to ensure no shading takes place from adjacent rows throughout the year.

Further, wind loading behind the PV modules at the installation location can tip, move, or otherwise damage the PV modules unless the PV modules are secured in some fashion. Typical solutions involve added ballast such as concrete blocks or structural penetrations used to anchor the PV modules to the structure on which they have been installed. Alternately, for ground-mounted arrays, piles are driven into the ground and the arrays are secured to the piles. These solutions add costs, and in the case of roof mounts, decrease the serviceable life of the building and the number of modules that can be placed on the roof due to weight limitations.

Various solar energy systems and modules are known. For example, US 2008/0029149 A1 discloses "a solar module with a frame 1 holding an array completely populated with solar cell 3 and reflector 4 pairings, all at a 45 degree angle to module cover", see US 2008/0029149 A1 at paragraph [0025].

As another example, US 5,538,563 A discloses a "solar energy concentrator apparatus which simultaneously focuses incident solar radiation upon both sides of a bifacial photovoltaic cell. The concentrator apparatus includes a corrugated-shaped reflector sheet and an open-grid support structure. Bifacial photovoltaic cells are held in place by the open-grid support structure", see US 5,538,563 A at Abstract.

As another example, US 4,020,827 A discloses a "solar energy collecting system" that includes rows 14 of solar energy collecting panels 16 and also that each of the "collector panels [16] may be of the type which heats water or another fluid medium for subsequent use, or they may be of the photoelectric type", US 4,020,827 A at col. 4, lines 52-65.

As another example, DE 20 2006 020 180 U1 discloses various solar roof configurations with various arrangements of solar modules 3 and reflective areas 4. DE 20 2006 020 180 U1 at Figs. 1-7b and paragraphs [0035]-[0042].

The subject matter claimed herein is not limited to embodiments that solve any disadvantages or that operate only in environments such as those described above. Rather, this background is only provided to illustrate one exemplary technology area where some embodiments described herein may be practiced.

### BRIEF SUMMARY OF SOME EXAMPLE EMBODIMENTS

In general, some embodiments disclosed herein relate to solar energy systems including multiple PV modules.

A solar energy system with the features of claim 1 is provided. The solar energy system includes a plurality of module rows and a plurality of reflector rows. Each module row includes a plurality of PV modules. Each PV module includes a plurality of PV cells arranged in a plurality of cell rows, the PV cells in each cell row being electrically connected in parallel to each other, and the plurality of cell rows being electrically connected in series to each other. Each PV module further includes a rectangular frame including a frame extension extending from each of four corners of the corresponding photovoltaic module, two of the frame extensions at a top of the corresponding photovoltaic module extending to a height above an upper edge of the frame; and a power conversion device electrically connected in series with the plurality of cell rows. Each reflector row includes a plurality of reflectors. The reflector rows are interposed between the module rows such that each reflector row is mechanically interconnected between two adjacent module rows and is arranged to reflect light having some incident angles on to one of the two adjacent module rows.

Furthermore, a solar energy system with the features of claim 15 is provided, including a plurality of PV modules, a plurality of low-voltage inverters, and a plurality of selector circuits. The PV modules are divided into a plurality of groups, the PV modules within each group being electrically connected in parallel to each other. Each PV module includes a plurality of PV cells arranged in a plurality of cell rows, the PV cells in each cell row being electrically connected in parallel to each other, and the plurality of cell rows being electrically connected in series to each other. Each low-voltage inverter is electrically connected to a corresponding group of PV modules to receive direct current ("DC") input generated by the PV modules in the corresponding group. Each selector circuit is electrically connected between a corresponding group of PV modules and low-voltage inverter. The selector circuits are further connected to each other such that the DC input of each low-voltage inverter is re-routable to one or more of the other low-voltage inverters in the event of a failure of an inverter.

In yet another example embodiment, a reflector includes a superstrate layer, a spectrally selective reflective layer, and a backsheet. The spectrally selective reflective layer is disposed behind the superstrate layer. A reflection band of the spectrally selective reflective layer depends on an angle of incidence of incoming light rays. The spectrally selective reflective layer is environmentally sealed between the superstrate layer and the backsheet.

This Summary is provided to introduce a selection of concepts in a simplified form that are further described below in the Detailed Description. This Summary is not intended to identify key features or essential characteristics of the claimed subject matter, nor is it intended to be used as an aid in determining the scope of the claimed subject matter.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

To further clarify the above and other advantages and features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:
Figure 1 illustrates an example solar energy system having multiple PV modules and reflectors arranged in a series of interconnected rows via multiple rail assemblies;
Figure 2A is a side view of a PV module and reflector such as may be employed in the solar energy system of Figure 1;
Figure 2B is a perspective view of the PV module and reflector of Figure 2A;
Figure 2C is a side view of another PV module and reflector such as may be employed in the solar energy system of Figure 1;
Figure 2D is a perspective view of an interconnection between the PV module and reflector of Figure 2C;
Figures 3A-3B are perspective views of an example insert that can be employed to interconnect the example PV modules, reflectors and/or rail assemblies of the solar energy system of Figure 1;
Figure 4A is an exploded perspective view of a rail assembly such as may be employed in the solar energy system of Figure 1, the rail assembly including one or more rails and fins:
Figure 4B is a side view of the fin of Figure 4A;
Figure 5A is a cross-sectional view of the rail of Figure 4A;
Figure 5B is a cross-sectional view of the fin of Figure 4A;
Figure 5C is a cross-sectional view of the rail and fin of Figure 4A in an assembled configuration;
Figures 6A-6B are a front view and a cross-sectional side view of an example PV module that may be implemented in the solar energy system of Figure 1:
Figures 7A-7B illustrate an example of a non-concentrating and diffuse reflector that may be implemented in the solar energy system of Figure 1;
Figures 8A-8D illustrate another example of a non-concentrating and diffuse reflector that may be implemented in the solar energy system of Figure 1;
Figure 9 illustrates a reflection pattern formed by the non-concentrating and diffuse reflector according to the configuration of Figures 8A-8B;
Figure 10 illustrates yet another example of a non-concentrating and diffuse reflector that may be implemented in the solar energy system of Figure 1;
Figures 11A-11B illustrate yet another example of non-concentrating and diffuse reflectors that can be implemented in the solar energy system of Figure 1;
Figures 11C-11D illustrate example solar energy systems in which the non-concentrating and diffuse reflectors of Figures 11A-11B are implemented;
Figure 12 is a graph comparing the quantum efficiency of an example PV material such as may be employed in the PV module of Figures 6A-6B and the AMU 1.5 solar spectrum;
Figure 13 illustrates another example solar energy system having multiple PV modules arranged in a series of interconnected rows and employing multiple redundant inverters; and
Figure 14 is a graph comparing the delivered power of various solar energy systems implementing multiple PV modules and one or more inverters.

### DETAILED DESCRIPTION OF SOME EXAMPLE EMBODIMENTS

Embodiments of the invention generally relate to solar energy systems including illumination agnostic PV modules and opposing discrete reflectors arranged in a series of interconnected rows. As used herein, the term "illumination agnostic" indicates relative insensitivity to non-uniform illumination conditions. In some embodiments, the relative insensitivity of the PV modules to non-uniform illumination conditions results from the arrangement of the individual PV cells within each PV module in rows, the PV cells within each row being electrically connected in parallel, and the rows being electrically connected in series. The PV modules and reflectors are arranged in alternating rows within the solar energy system.

### I. EXAMPLE SOLAR ENERGY SYSTEM

Reference will now be made to the drawings to describe various aspects of example embodiments of the invention. It is to be understood that the drawings are diagrammatic and schematic representations of such example embodiments, and are not limiting of the present invention, nor are they necessarily drawn to scale.

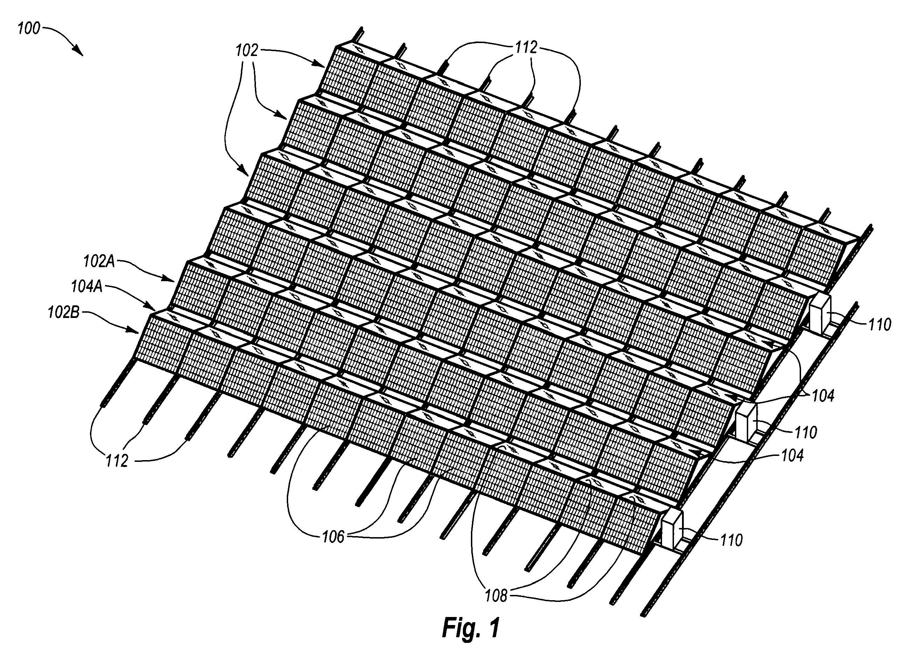

Turning first to Figure 1, a perspective view of an example solar energy system 100 according to some embodiments is illustrated. The solar energy system 100 includes a plurality of module rows 102, and a plurality of reflector rows 104. The reflector rows 104 are interposed and mechanically interconnected between adjacent module rows 102. Further, each reflector row 104 is arranged to reflect at least some wavelengths of light having at least some incident angles on to one of the two adjacent module rows 102. For instance, reflector row 104A is arranged to reflect at least some wavelengths of light having at least some incident angles on to adjacent module row 102A. As used herein, the terms "light," "light rays" and similar terms generally refer to any electromagnetic radiation, whether visible to the human eye or not.

Each module row 102 includes a plurality of PV modules 106, and each reflector row 104 includes a plurality of discrete reflectors 108. The PV modules 106 are generally configured to generate electrical energy from solar energy according to the photovoltaic effect. The reflectors 108 are generally configured to reflect light onto the PV modules 106. However, as already indicated above, whether light is reflected by the reflectors 108 onto the PV modules 106 may depend on wavelength and/or incident angle of the incoming light.

Each module row 102 has an adjacent front-side reflector row 104 and back-side reflector row 104. The terms "front-side" and "back-side" are directional terms that depend on a particular module row 102. Specifically, a front-side reflector row 104 is a reflector row 104 disposed immediately adjacent to and to the front of a particular module row 102, and a back-side reflector row 104 is a reflector row 104 disposed immediately adjacent to and to the back of a particular module row 102. Thus, each reflector row 104 disposed between two adjacent module rows 102 is both a front-side reflector row 104 and a back-side reflector row 104. For instance, the reflector row 104A is a front-side reflector row 104 with respect to the module row 102A, and a back-side reflector row 104 with respect to module row 102B. Since each module row 102 includes PV modules 106 and each reflector row 104 includes reflectors 108, the terms "front-side" and "back-side" can be applied analogously to reflectors 108 to describe the relative positions of reflectors 108 with respect to PV modules 106.

In the example of Figure 1, the module row 102B is at the front edge of solar energy system 100 and thus lacks a front-side reflector row 104. As such, the module row 102B may receive relatively less illumination throughout a day than other module rows 102 within the solar energy system 100, and may therefore be relatively less efficient at producing electrical energy than the other module rows 102. Accordingly, in some embodiments, the module row 102B includes a plurality of module blanks, as opposed to functioning PV modules 106, the module blanks providing structural support for the solar energy system 100 but not contributing to the electrical output of solar energy system 100.

In the illustrated embodiment, the solar energy system 100 further includes a plurality of inverters 110 configured to convert DC power generated by the PV modules 106 and/or stored in batteries to alternating current ("AC") power. In the example of Figure 1, the inverter 110 to module row 102 ratio is 1:2. In other embodiments, the inverter 110 to module row 102 ratio may be higher or lower than 1:2, depending on, among other things, the outputs of the individual module rows 102 and/or the capabilities of each inverter 110.

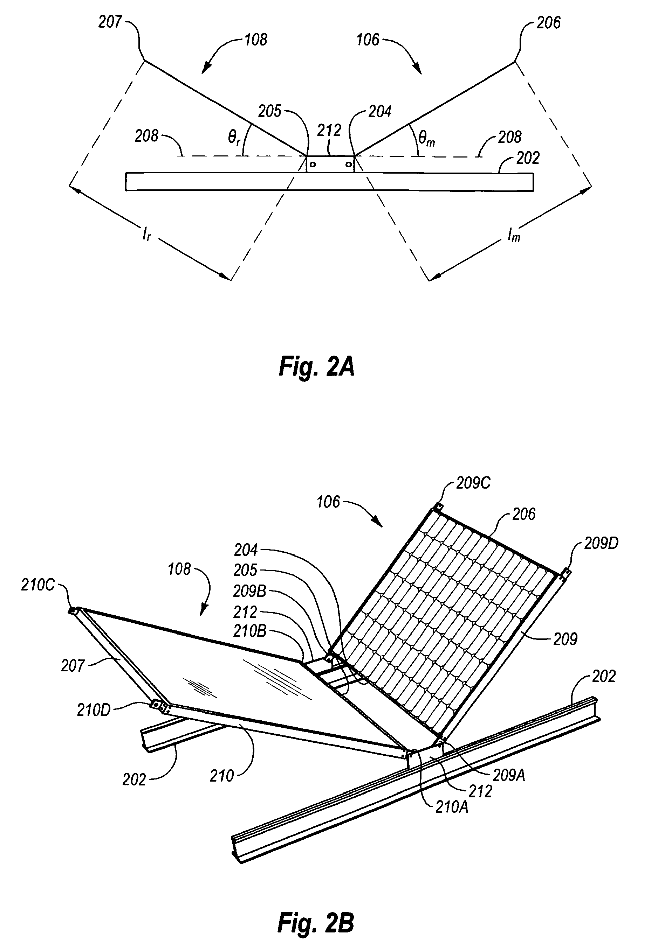

Alternately or additionally, the solar energy system 100 further includes a plurality of rail assemblies 112 arranged substantially orthogonal to the module rows 102 and the reflector rows 104. Each rail assembly 112 includes one or more rails 202 (Figures 2A-2B). The module rows 102 and reflector rows 104 are attached to the rails 202 of the rail assemblies 112.

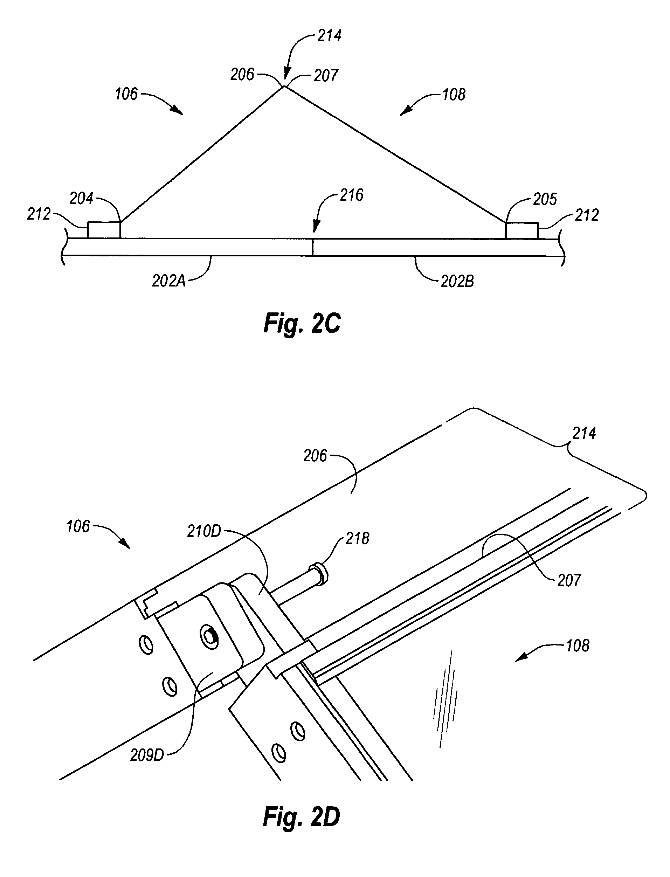

Reference is additionally made to Figures 2A-2D which disclose additional aspects of solar energy system 100. Figures 2A-2B illustrate a side view and a perspective view of a PV module 106 and corresponding front-side reflector 108 from a module row 102 and corresponding front-side reflector row 104, respectively. Figure 2C illustrates a side view of a PV module 106 and corresponding back-side reflector 108 from a module row 102 and corresponding back-side reflector row 104, while Figure 2D illustrates a perspective view of a portion of Figure 2C.

In the example of Figures 2A-2B, the PV module 106 and front-side reflector 108 are both attached to two rails 202 from adjacent rail assemblies 112. Each of the PV modules 106 and reflectors 108 includes a base 204, 205 attached to the rails 202. Each PV module 106 and reflector 108 additionally includes a top 206, 207 opposite the base 204, 205. Note that all of the bases 204 of the PV modules 106 in a module row 102 define a base of the module row 102. Similarly, all of the bases 205 of the reflectors 108 in a reflector row 104 define a base of the reflector row 104.

As best seen in Figure 2A, each of the PV modules 106 and reflectors 108 has a length *lₘ* and *lᵣ*, respectively. Additionally, each of the PV modules 106 and reflectors 108 is aligned at an angle θ*ₘ* and θ*ᵣ*, relative to a horizontal reference plane 208, respectively.

As best seen in Figure 2B, each of the PV module 106 and reflector 108 includes a substantially rectangular frame 209, 210. The frames 209, 210 are used in combination with the rail assemblies 112 (Figure 1) to form an interconnected structural framing system.

Each frame 209, 210 includes frame extensions 209A-209D, 210A-210D extending from its four corners. The two frame extensions 209A-209B, 210A-210B at the base 204, 205 of the PV module 106 and reflector 108 are configured to attach to the rails 202. The two frame extensions 209C-209D at the top 206 of the PV module 106 are configured to attach to the frame extensions 210C-210D of an adjacent back-side reflector 108 (Figure 2D).

In some embodiments, the frame extensions 209A-209D, 210A-210D are integrally formed in the frames 209, 210. In other embodiments, the frame extensions 209A-209D, 210A-210D are inserts that are attached to the frames 209, 210.

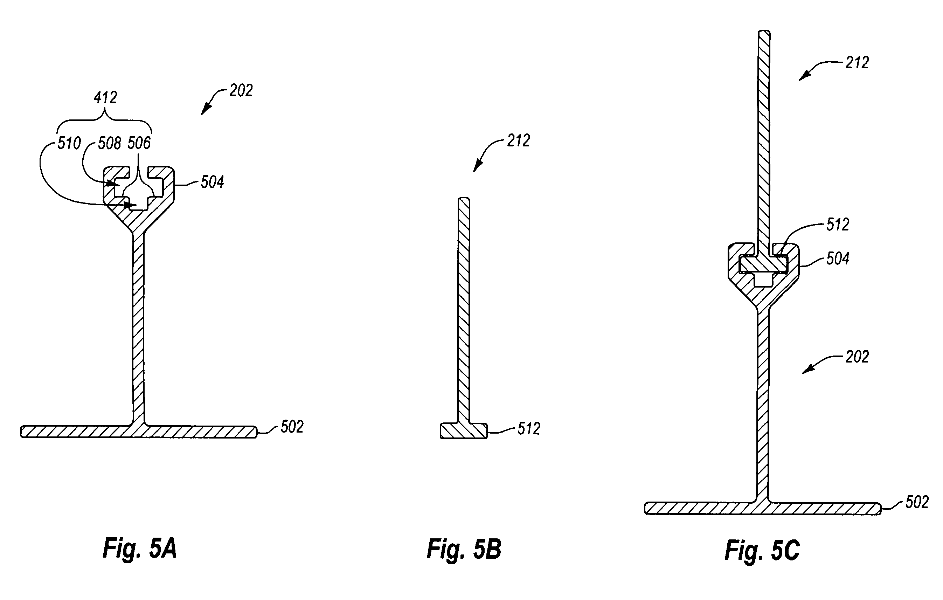

As illustrated in Figures 2A-2B, the base 204 of the PV module 106 and the base 205 of the reflector 108 are attached to the rails 202 via direct attachment to fins 212 included in each rail assembly 112 (Figure 1). In some embodiments, the fins 212 are adjustably attached to the rails 202 such that the attachment position of each fin 212 is adjustable along the length of the rails 202. It will be appreciated, with the benefit of the present disclosure, that the longitudinal spacing of the fins 212 along each rail assembly 112 can be varied to arrange the PV modules 106 and/or reflectors 108 at predetermined angles θ*ₘ* and θ*ᵣ* that maximize electrical output depending on various factors at an installation location, the various factors including one or more of latitude, snow/climate conditions, surface conditions of the installation location, and the like. Additional aspects of the rail assemblies 112, including the rails 202 and fins 212, are disclosed in Figures 5-7C.

As illustrated in Figure 2C, the PV module 106 and back-side reflector 108 are arranged such that the tops 206, 207 of the PV module 106 and back-side reflector 108 come together to form an apex 214. Further, the PV module 106 and reflector 108 are connected to different rails 202A, 202B included in the same rail assembly 112 (Figure 1). In some embodiments, the location of the rail-to-rail interconnect 216 between rails 202A, 202B is immediately or substantially immediately beneath the apex 214. In some embodiments, the location of the rail-to-rail interconnect 216 immediately or substantially beneath the apex 214 ensures maximum structure stability, e.g., maximum truss effect.

Figure 2D illustrates a close-up perspective view near the apex 214 formed by the PV module 106 and back-side reflector 108. As depicted in Figure 2D, the frame extension 209D of the PV module 106 is mechanically connected to the frame extension 210D of back-side reflector 108. Although not illustrated in Figure 2D, the frame extension 209C of PV module 106 is connected in an analogous manner to the frame extension 210C of back-side reflector 108.

In the illustrated embodiment, the frame extensions 209D, 210D are mechanically connected via a pin 218. Optionally, the pin 218 is removable to permit the PV module 106 to be disconnected from the back-side reflector 108. After disconnection, the PV module 106 and/or back-side reflector 108 can be rotated away from each other about their respective bases 204, 205 (Figures 2A-2C) to provide easy access to the back-side of the PV module 106 for servicing. Although Figure 2D depicts a removable pin 218 for connecting the PV module 106 to the back-side reflector 108, in other embodiments, the PV module 106 can be connected to the back-side reflector 108 using one or more screws, bolts, nuts, pins, clips or other fasteners.

### A. Frame Extensions

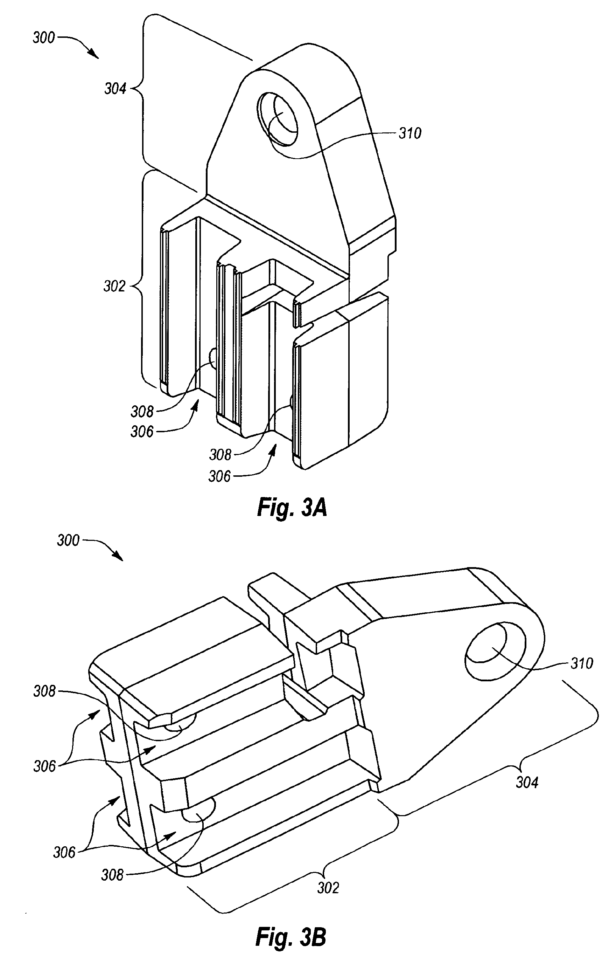

As already indicated above, the frame extensions 209A-209D, 210A-210D can be integrally formed in the frames 209, 210 of the PV modules 106 and reflectors 108 or the frame extensions 209A-209D, 210A-210D can include inserts that are attached to the frames 209, 210. For example, Figures 3A-3B illustrate two different perspective views of an example insert 300 that can be implemented as one or more of the frame extensions 209A-209D, 210A-210D.

The insert 300 includes an insertion end 302 and an extension end 304. The insertion end 302 is configured to be received within a receptacle of a frame, such as the frames 209, 210 described above. In this and other embodiments, the frame includes four receptacles formed at the four corners of the frame to receive a total of four inserts 300. The insertion end 302 includes a plurality of slots 306 extending in an insertion direction of the insert 300. The slots 306 are configured to receive and engage corresponding protrusions formed within the receptacle of the frame when the insert 300 is inserted into the frame.

Alternately or additionally, one or more through holes 308 are formed in the insertion end 302 transverse to the insertion direction of the insert 300. In some embodiments, the through holes 308 are tapped. The through holes 308 are configured to align with corresponding through holes formed in the frame so as to receive screws, bolts, or other fasteners inserted through the frame through holes into the insert 300 through holes 308, to thereby secure the insert 300 within the frame.

The extension end 304 is configured to extend beyond the frame into which the insert 300 is inserted. The extension end 304 includes a through hole 310. To connect the tops of two frames and form an apex such as illustrated in Figures 2C-2D using frames with inserts 300, the tops of the two frames are brought together such that the through hole 310 of each insert 300 at the top of the one of the frames is aligned with the through hole 310 of a corresponding insert 300 at the top of the other frame. After aligning each pair of through holes 310, a pin or other fastener can then be inserted through the aligned pairs of through holes 310 to secure the tops of the two frames together.

### B. Rail Assemblies

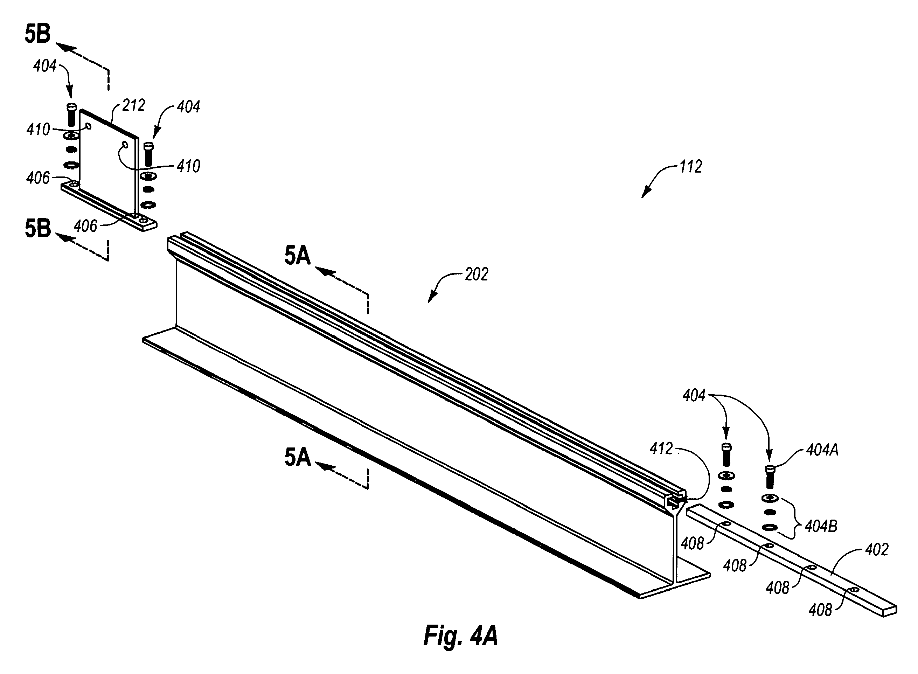

Turning next to Figures 4A-5C, additional aspects of the rail assemblies 112 are disclosed. Figure 4A is an exploded perspective view of a portion of a rail assembly 112. In the illustrated embodiment, the rail assembly 112 includes a rail 202, a fin 212, and a rail-to-rail interconnect 402 ("interconnect 402"). Although the rail assembly 112 of Figure 4A includes a single rail 202, fin 212 and interconnect 402, it will be appreciated that a rail assembly 112 can more generally include one or more rails 202, fins 212 and interconnects 402.

In the example of Figure 4A, two fastener assemblies 404 are provided for attaching each of the fin 212 and interconnect 402 to the rail 202. Each fastener assembly 404 includes a fastener 404A and one or more washers 404B. The washers 404B include lock and star washers in some embodiments. The fasteners 404A are inserted through corresponding through holes 406, 408 formed in the fin 212 and interconnect 402 to engage the rail 202 and secure the fin 212 or interconnect 402 to the rail 202.

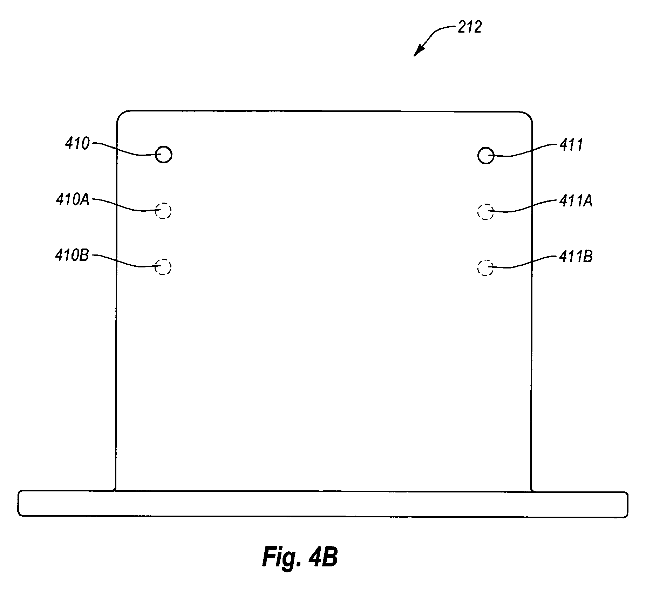

As already explained above, the fins 212 can be attached to the rails 202 at any desired longitudinal position along the rails 202. Further, each fin 212 includes two through holes 410, 411 as best seen in Figure 4B. The first through hole 410 is configured to receive a screw, bolt or other fastener for securing a frame extension at the base 204 (Figures 2A-2C) of a single PV module 106 to the fin 212. Alternately, the first through hole 410 is configured to receive a screw, bolt or other fastener for securing two adjacent frame extensions, one each at the bases 204 of two adjacent PV modules 106, to the fin 212. The other through hole 411 is configured to receive a screw, bolt or other fastener for securing one or two frame extensions at the base(s) 205 (Figures 2A-2C) of a single or two adjacent reflectors 108 to the fin 212.

In the illustrated embodiment of Figure 4B, the two through holes 410, 411 are disposed at approximately the same height on the fin 212. Alternately or additionally, the two through holes 410, 411 are disposed at different heights. Alternately or additionally, the fin 212 includes a plurality of additional through holes 410A-410B, 411A-411B disposed at different heights along the fin 212. Although not shown, the fin 212 optionally further includes a plurality of additional through holes disposed at different longitudinal positions. The inclusion of additional through holes 410A-410B, 411A-411B and/or any additional longitudinally-disposed through holes in the fin 212 permits the PV modules 106 and reflectors 108 to attach to the fin 212 at a variety of positions, allowing for some flexibility in the angles θ*ₘ*, θ*ᵣ* (Figure 2A) of the PV modules 106 and reflectors 108 when they are installed in a solar energy system such as the solar energy system 100 of Figure 1.

Returning to Figure 4A, the interconnect 402 is configured to interconnect two longitudinally adjacent rails 202 together. In some embodiments, the interconnect 402 includes four through holes 408. As such, when interconnecting two longitudinally adjacent rails 202 together, the interconnect 402 can be disposed so as to straddle the disconnect between the two rails 202, such that two of the through holes 408 are disposed above one of the rails 202, while the other two of the through holes 408 are disposed above the other of the rails 202. Two fastener assemblies 404 can then be employed to secure the interconnect 402 to one of the rails 202, and another two fastener assemblies 404 can be employed to secure the interconnect 402 to the other of the rails 202.

It will be appreciated that some installation locations, such as roofs, are not perfectly planar and have variable slopes. Accordingly, in some embodiments, the interconnects 402 have sufficient compliance to allow longitudinally adjacent rails 202 to conform to different slopes, while maintaining the mechanical and electrical connection between the longitudinally adjacent rails 202. Alternately or additionally, the interconnects 402 are sufficiently compliant to allow for surface variations of at least 1/8 of an inch at the installation location.

In some examples, the rail assemblies 112 of the solar energy system 100 of Figure 1 provide an electrical ground for all of the PV modules 106. As such, the rails 202, fins 212, interconnects 402 and/or fastener assemblies 404 are made of conductive metal or other conductive materials in some embodiments. Alternately or additionally, the rail assemblies 112 employ locking, star or other washers, e.g., in the fastener assemblies 404, to maintain electrical continuity.

For added mechanical support in the fin 212-to-rail 202 connection and in the interconnect 402-to-rail 202 connection, the rail 202 includes a continuous open channel 412 formed along its top. As will be described in greater detail with respect to Figures 5A-5C, the channel 412 is shaped to laterally confine the rail 202 and interconnect 402 within the channel 412.

Figure 5A is a cross-sectional view of the rail 202 taken along a direction normal to the length of the rail 202. In the illustrated embodiment, the rail 202 has a substantially T-shaped cross-section, and includes a base 502 and top 504. The base 502 is configured to rest on a base surface at an installation location and support the rest of solar energy system 100 (Figure 1) above the base surface at the installation location. The top 504 of the rail 202 includes the channel 412 formed therein. The channel 412 includes two shoulders 506 that separate the channel 412 into an upper portion 508 and a lower portion 510. In some embodiments, the rail 202 is continuously extruded.

Figure 5B is a cross-sectional view of the fin 212 taken along a direction normal to the length of the fin 212. In the illustrated embodiment, the fin 212 has a substantially T-shaped cross-section and includes a base 512. The base 512 has a cross-sectional shape that is complementary to the cross-sectional shape of the upper portion 508 of channel 412, such that the base 512 is configured to be received within the upper portion 508 of the channel 412, as illustrated in Figure 5C.

With combined reference to Figures 4A-5C, the fin 212 is connected to the rail 202 by inserting the base 512 of the fin 212 into the upper portion 508 of the channel 412 from one of the ends of the rail 202. After the fin 212 has been positioned at a desired position along the length of the rail 202, a fastener 404A is inserted through one or more washers 404B and through hole 406, whereupon the fastener 404A extends into the lower portion 510 of channel 412, engaging the sidewalls of the lower portion of channel 412 to secure the fin 212 to the rail 202.

Although not illustrated, the interconnect 402 includes a cross-sectional shape that is complementary to the cross-sectional shape of the upper portion 510 of channel 412, such that the interconnect 402 can be connected to the rail 202 in a manner analogous to that described for the fin 212.

Referring again to Figure 1, in some embodiments, by interconnecting the PV modules 106 and reflectors 108 together using rail assemblies 112, the solar energy system 100 can be installed in a flat or nearly flat installation location, such as a roof, without having to be anchored directly to the installation location. Specifically, the aggregate weight of the solar energy system 100 is sufficient to self-ballast the solar energy system 100. As a result, it is not necessary in some embodiments to drill anchors into the installation location or otherwise secure the solar energy system 100 to the installation location other than by placing the solar energy system 100 on the installation location.

### II. EXAMPLE PV MODULE

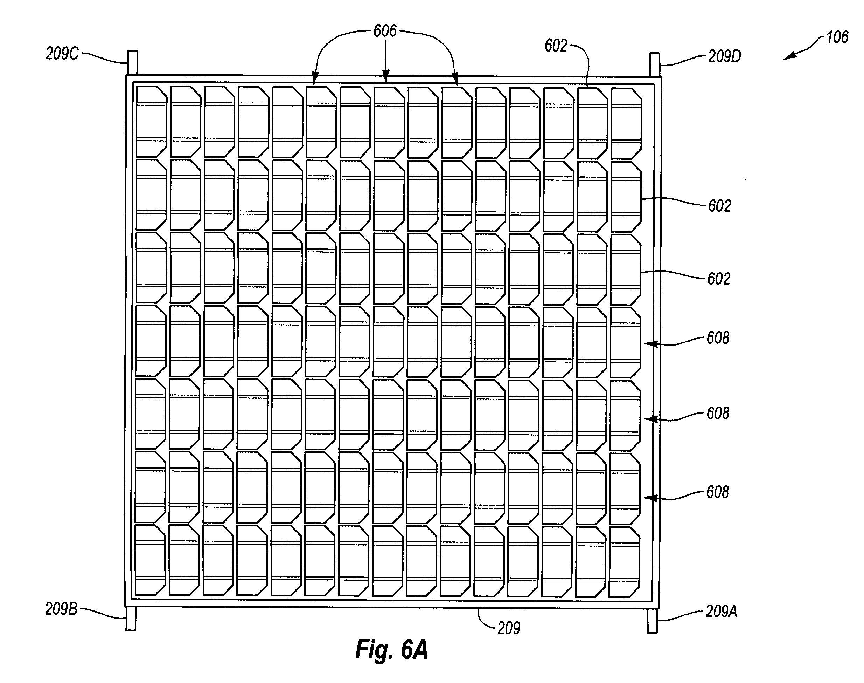

With additional reference to Figures 6A-6B, aspects of an example PV module 106 that can be implemented in the solar energy system 100 of Figure 1 are disclosed according to some embodiments. Figures 6A-6B depict, respectively, a front view and a cross-sectional side view of the PV module 106 in simplified form.

In the illustrated embodiment, the PV module 106 includes a plurality of PV cells 602 arranged in a plurality of cell rows 606 and cell columns 608. The PV cells 602 within each cell row 606 are electrically connected in parallel to each other. Additionally, the plurality of cell rows 606 are electrically connected in series to each other.

In some embodiments, current generated by the PV cells 602 during operation travels substantially uni-directionally from left to right through the PV cells 602. Further, the parallel electrical connection of the PV cells 602 within each cell row 606 allows current to re-balance from top to bottom to maximize current flow in the case of non-uniform illumination of the PV cells 602. Additional details regarding current balancing are disclosed in U.S. Patent Application Serial No. 12/357,268, filed January 21, 2009 for a FLAT-PLATE PHOTOVOLTAIC MODULE (hereinafter the '268 application) and in U.S. Patent Application Serial No. 12/357,260, filed January 21, 2007 for REDUNDANT ELECTRICAL ARCHITECTURE FOR PHOTOVOLTAIC MODULES (hereinafter the '260 application).

As such, the PV module 106 is relatively insensitive to non-uniform illumination conditions as compared to some conventional PV modules that implement only serially-connected PV cells. As used herein, a PV module 106 is relatively insensitive to non-uniform illumination conditions it has an increasing fill factor when subject to non-uniform illumination. The increasing fill factor at least partially offsets current loss created when a portion of the PV module 106 is shaded. In contrast, conventional PV modules lose fill factor quickly when even a small area of the conventional PV module is shaded.

Furthermore, some PV modules 106 that are relatively insensitive to non-uniform illumination conditions are configured to maintain a continuous and non-abrupt change in power as a function of remaining illuminated area which is continuously connected. In contrast, some conventional PV modules experience abrupt losses in power as different PV cells are shaded.

Figure 6A further illustrates the frame 209 of PV module 106, including frame extensions 209A-209D.

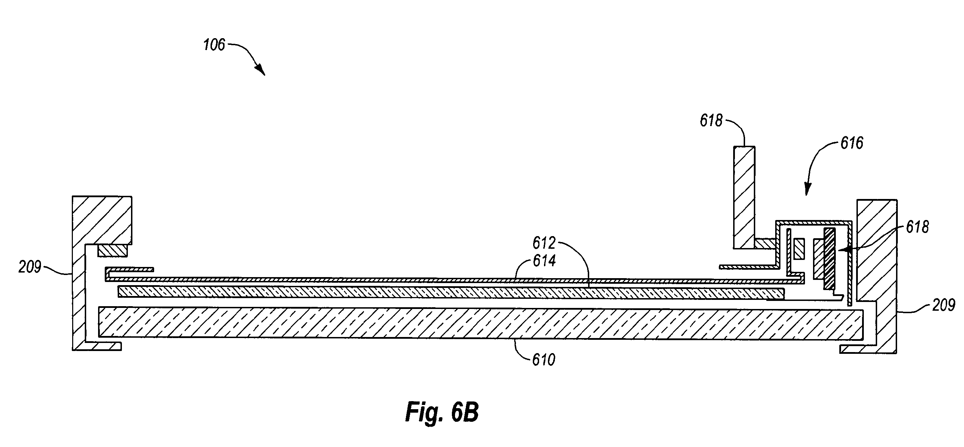

With additional reference to Figure 6B, the PV module 106 includes a substantially transparent front plate 610 disposed in front of a cell layer 612 that includes all of the PV cells 602. A conductive backsheet 614 is disposed behind the cell layer 612 and is configured to form a current return path for the cell layer 612. The cell layer 612 is sealed between the front plate 610, conductive backsheet 614 and frame 209 which cooperate to provide environmental protection for the cell layer 612.

The PV module 106 further includes a power conversion device 616 redundantly connected in series with the cell rows 606 (Figure 6A) of cell layer 612. Two electrical connectors 618 extend from the power conversion device 616, one of which is a supply line and the other of which is a negative line in some embodiments. Note that only one electrical connector 618 is visible in Figure 6B; the other electrical connector 618 is spaced apart from the electrical connector 618 visible in Figure 6B and positioned either behind or in front of the electrical connector 618 visible in Figure 6B.

The power conversion device 616 includes a plurality of power conversion circuits (not shown) configured to provide power conditioning of the electrical power generated by the PV cells 602 within cell layer 612. "Power conditioning" includes, for example, stepping up the voltage to a predetermined output voltage; maintaining maximum peak power; reducing current ripple at the input and output of the power conversion device 616; detecting, monitoring, and maintaining a programmed charge profile for one or more batteries directly connected to the output of power conversion device 616; and/or maintaining a constant voltage source for a battery-less grid tie inverter. By implementing a power conversion device 616 in each of the PV modules 106 in a solar energy system 100 (Figure 1), each PV module 106 independently controls its own power conditioning to maximize efficiency of the solar energy system 100.

Additional aspects of power conversion devices that can be implemented in the PV module 106 are disclosed in the '268 and '260 applications.

### III. EXAMPLE REFLECTOR

Referring again to Figure 1, according to some embodiments, each of the reflectors 108 is a non-concentrating and diffuse reflector. The non-concentrating and diffuse reflecting properties of the reflectors 108 may be obtained by any combination of crowning, anisotropic surface texturing, stippling or specular reflection control. According to some embodiments, the diffuse reflecting property of the reflectors 108 helps unify the reflected light onto the PV modules 106 by washing out the effect of non-reflecting areas between reflectors 108, such as spaces between reflectors 108 and the reflector 108 frames 210.

### A. Crowning Reflector

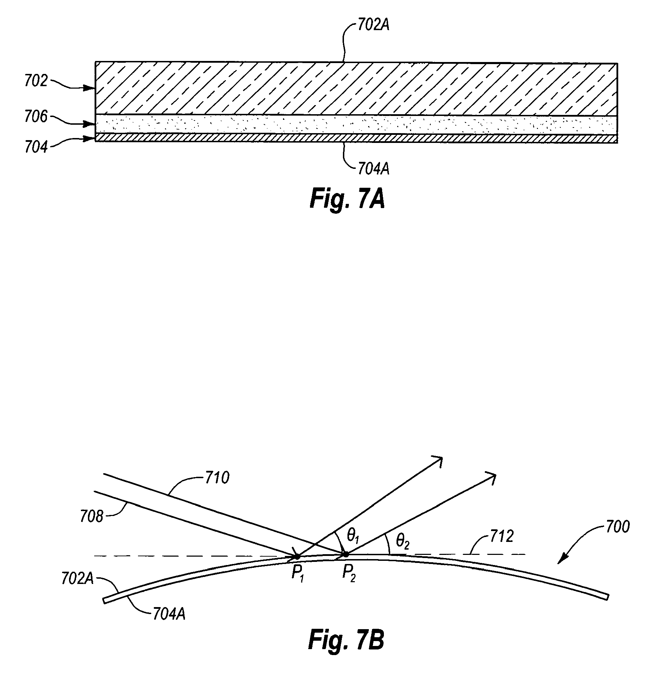

For instance, Figures 7A-7B depict a non-concentrating and diffuse reflector 700 such as may be implemented in the solar energy system 100 of Figure 1. Figure 7A illustrates an example material stack making up the reflector 700. In the illustrated embodiment, the reflector 700 includes a superstrate layer 702 having an exposed front side 702A, a reflective layer 704 having an exposed back side 704B, and an adhesive layer 706. The exposed front side 702A of the superstrate layer 702 corresponds to the front side of the reflector 700. The exposed back side 704A of the reflective layer 704 corresponds to the back side of the reflector 700.

The superstrate layer 702 is glass or other suitable material. Additionally, the superstrate layer 702 has a first coefficient of thermal expansion.

The reflective layer 704 is a metal backsheet including high yield-strength aluminum foil or other suitable material. In some embodiments, the yield strength of the reflective layer 704 is approximately 150 mega Pascals ("mPa"). Alternately or additionally, the yield strength of the reflective layer 704 is between 30-200 mPa. In other embodiments, the yield strength of the reflective layer 704 is less than 30 mPa or greater than 200 mPa. Additionally, the reflective layer 704 has a second coefficient of thermal expansion that is greater than the first coefficient of thermal expansion.

The adhesive layer 706 is ethylene-vinyl acetate ("EVA") or other suitable adhesive. The adhesive layer 706 couples the superstrate layer 702 and reflective layer 704 together.

Figure 7B illustrates a side view of the reflector 700 showing the crowning of the reflector 700. Specifically, the reflector 700 is a convex reflector. As such, parallel incoming light rays 708, 710 incident on the reflector 700 at different locations *p₁, p₂* are reflected diffusely, e.g., at different angles relative to a horizontal reference plane 712. For instance, incoming light ray 708 is reflected at a first angle θ*₁*, while incoming light ray 710 is reflected at a second angle θ*₂* that is smaller than θ*₁*. By diffusely reflecting incoming light rays such as incoming light rays 708, 710, the reflector 700 substantially avoids concentrating reflected light rays onto individual PV cells or groups of PV cells within a PV module, which concentration of light rays might otherwise be detrimental to the performance of the PV module.

In some embodiments, the crowning of the reflector 700 results from a lamination and cooling process used to create the reflector 700. In this and other examples, the superstrate layer 702, adhesive layer 706 and reflective layer 704 are laminated together at a first temperature where the three layers 702, 706, 704 are substantially planar at the first temperature. The first temperature is 140°C in some embodiments. The three layers 702, 706, 704 are then cooled in a controlled cooling process to a second temperature. In some embodiments, the second temperature is less than 100°C

During the cooling process, the adhesive layer 706 passes through the transition temperature of the superstrate layer 702. Because the first coefficient of thermal expansion of the superstrate layer 702 is lower than the second coefficient of thermal expansion of the reflective layer 704 and since the reflective layer 704 and superstrate layer 702 are bonded together by the adhesive layer 706, the reflective layer 704 essentially shrinks more than superstrate layer 702 during the cooling process and creates the crowned shape of the reflector 700 as best seen in Figure 7B.

### B. Anisotropic Surface Texturing

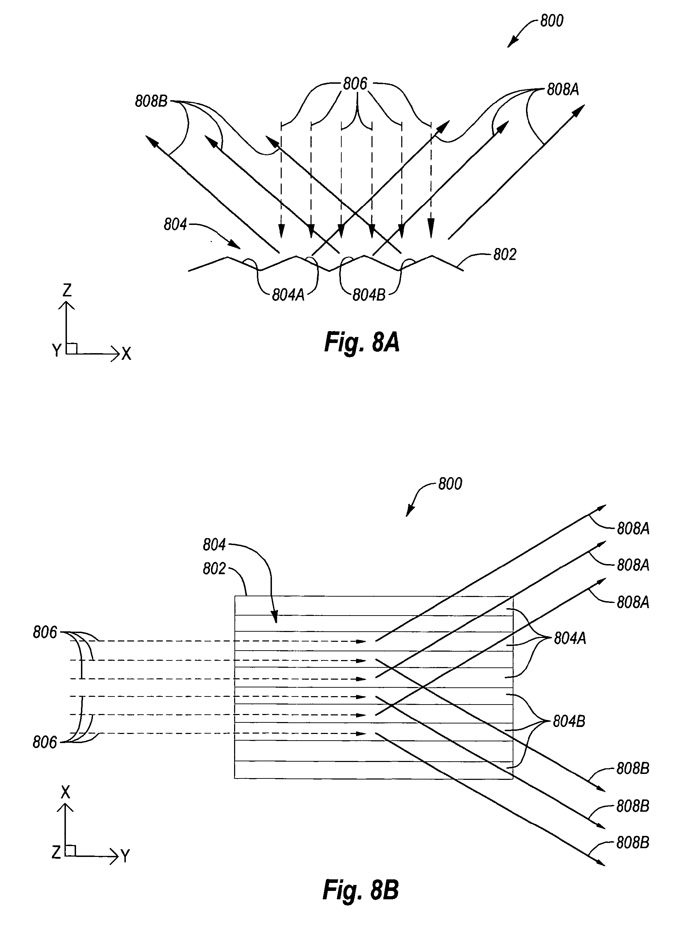

Figures 8A-8D depict aspects of another example of a non-concentrating and diffuse reflector 800 such as may be implemented in the solar energy system 100 of Figure 1. The reflector 800 is similar in some respects to the reflector 700 of Figures 7A-7B, and includes at least a superstrate layer (not shown), a reflective layer 802 disposed beneath the superstrate layer, and an adhesive layer (not shown) coupling the superstrate layer and reflective layer 802 together.

As best seen in Figure 8A, a front surface 804 of the reflective layer 802, e.g., the surface to which the superstrate layer (not shown) is coupled, is an anisotropically textured surface including first surfaces 804A facing a first direction and second surfaces 804B facing a second direction different than the first direction. The first and second surfaces 804A, 804B extend the entire length of the reflector 800 in some embodiments.

Figures 8A-8B illustrate an end view and a front view of the reflector 800 oriented such that incoming light rays 806 have a horizontal component (best seen in Figure 8B) that is substantially parallel to the lengths of the first and second surfaces 804A, 804B. The incoming light rays 806 additionally include a downward component (best seen in Figure 8A) towards the reflective layer 802.

Upon striking the reflective layer 802, a lateral component is introduced into reflected light rays 808A, 808B derived from incoming light rays 806. Specifically, incoming light rays 806 incident on the first surfaces 804A in Figure 8A are reflected laterally to the right (or down in Figure 8B) as reflected light rays 808A, while incoming light rays 806 incident on the second surfaces 804B in Figure 8A are reflected laterally to the left (or up in Figure 8B) as reflected light rays 808B. Thus, upon striking the reflective layer 802, the incoming light rays 806 are scattered laterally as reflected light rays 808A and 808B. The scattering of incoming light rays 806 laterally as reflected light rays 808A, 808B according to the configuration of Figures 8A-8B is referred to herein as "out-of-plane" scattering since the reflected light rays 808A, 808B are reflected out of a plane collectively defined by the incoming light rays 806.

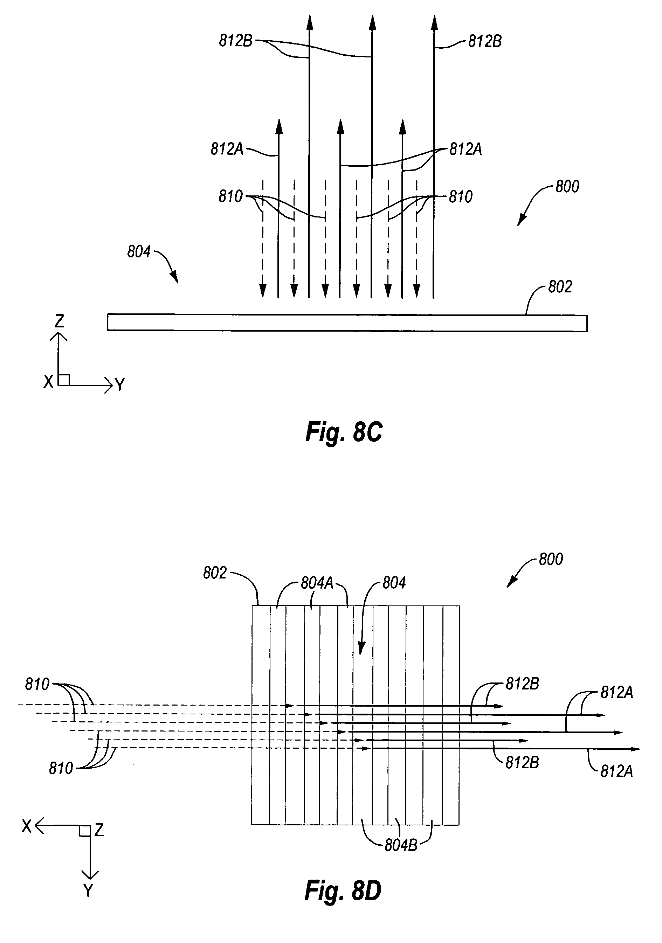

Figures 8C-8D illustrate another configuration of the reflector 800. In particular, Figures 8C-8D depict a side view and a top view of the reflector 800 oriented such that incoming light rays 810 have a horizontal component (best seen in Figure 8D) that is substantially orthogonal to the lengths of the first and second surfaces 804A, 804B. The incoming light rays 806 additionally include a downward component (best seen in Figure 8C) towards the reflective layer 802.

Upon striking the reflective layer 802, the incoming light rays 810 are reflected upwards at a first angle or a different second angle depending on whether the incoming light rays 810 are incident on the first or second surfaces 804A, 804B. Note that the first and second angles are considered relative to a single reference plane, rather than to the first or second surfaces 804A, 804B. Accordingly, incoming light rays 810 incident on the first surfaces 804A are reflected at the first angle as reflected light rays 812A while incoming light rays 810 incident on the second surfaces 804B are reflected at the second angle as reflected light rays 812B. The first angle is smaller than the second angle such that reflected light rays 812A have a smaller vertical component than reflected light rays 812B (see Figure 8C) and a larger horizontal component than reflected light rays 812B (see Figure 8D). The scattering of incoming light rays 810 as reflected light rays 812A, 812B with different horizontal and vertical components according to the configuration of Figures 8C-8D is referred to herein as "in-plane" scattering since the reflected light rays 812A, 812B are reflected substantially in the same plane collectively defined by the incoming light rays 810.

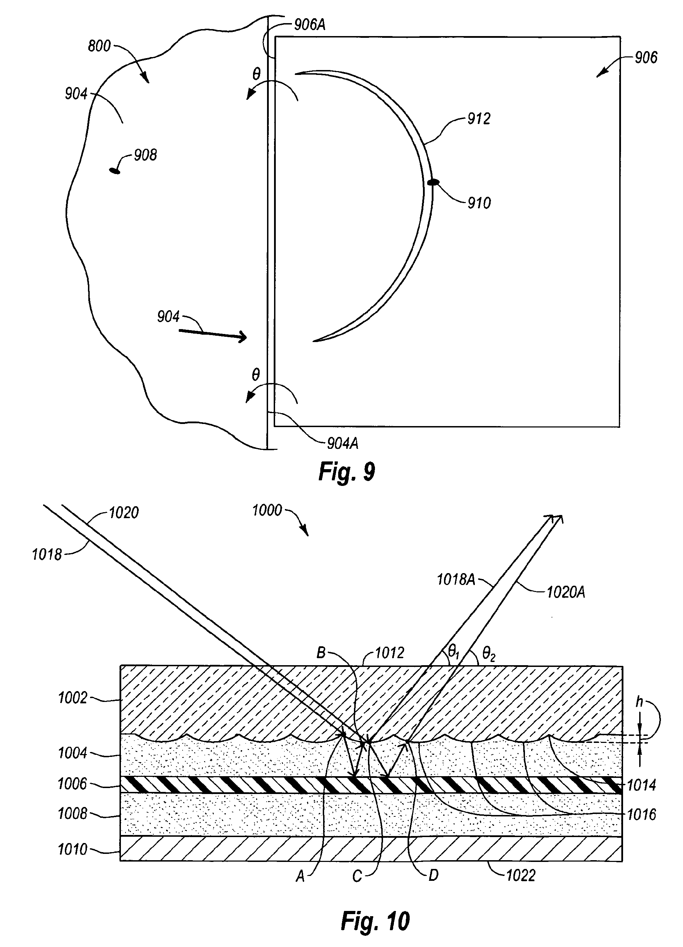

Figure 9 illustrates the scattering effect of the reflector 800 on incoming light rays when the reflector 800 is oriented such that incoming light rays have a horizontal component that is substantially parallel to the lengths of the first and second surfaces 804A, 804B, as in the configuration of Figures 8A-8B. In more detail, Figure 9 illustrates a portion of the reflector 800, the reflector 800 being oriented such that the lengths of the first and second surfaces 804A, 804B (not shown in Figure 9) are substantially parallel to reference arrow 902.

Additionally, in the example of Figure 9, a superstrate layer 904 is disposed above the first and second surfaces 804A, 804B. The superstrate layer 904 is substantially planar in some embodiments. Alternately or additionally, the superstrate layer 904 is glass.

Figure 9 further illustrates a substantially planar object 906 having an edge 906A disposed adjacent and substantially parallel to an edge 904A of the superstrate layer 904 of the reflector 800. The object 906 is oriented at an angle θ relative to the superstrate layer 904, where θ < 180°.

A substantially collimated beam of light (not shown) is directed toward the reflector 800 with a horizontal component that is substantially parallel to the reference arrow 902. The light beam may be provided by, e.g., a laser pointer. The light beam is incident on the reflector 800 and generates a first dot 908 of light thereon. A portion of the light beam is reflected by the superstrate layer 904 onto the object 906 without being significantly diffused or scattered. The portion of the light beam reflected by the superstrate layer 904 generates a second dot 910 of light on the object 906.

Another portion of the light beam penetrates through the superstrate layer 904 and is incident on the anisotropically textured front surface 804 (Figures 8A-8B) of reflective layer 802, the front surface 804 including first and second surfaces 804A, 804B. This portion of the light beam is diffused and scattered laterally by the first and second surfaces 804A, 804B of front surface 804 and directed towards the object 906. The diffused and scattered portion of the light beam generates an arc 912 of light on the object 906 due to the added out-of-plane path length. By diffusely reflecting incoming light rays as explained with respect to Figures 8A-9, the reflector 800 substantially avoids concentrating reflected light rays onto individual PV cells or groups of PV cells within a PV module, which concentration of light rays might otherwise be detrimental to the performance of the PV module.

### C. Stippling

Figure 10 depicts aspects of yet another example of a non-concentrating and diffuse reflector 1000 such as may be implemented in the solar energy system 100 of Figure 1. The reflector 1000 includes a superstrate layer 1002, an adhesive layer 1004, and a reflective layer 1006. Optionally, the reflector 1000 further includes a second adhesive layer 1008 and a backsheet 1010.

The superstrate layer 1002 is glass or other suitable material, and includes a front surface 1012 and a back surface 1014. The superstrate layer 1002 has a first index of refraction. Further, the superstrate layer 1002 includes a stipple pattern 1016 formed on the back surface 1014. The stipple pattern 1016 is isotropic across the back surface 1014 in some embodiments. In other embodiments, the stipple pattern 1016 is anisotropic across the back surface 1014.

Alternately or additionally, in some embodiments, the peak-to-valley height *h* of the stipple pattern 1016 is between 0.1 and 0.5 millimeters. In other embodiments, the peak-to-valley height *h* of the stipple pattern 1016 is less than 0.1 millimeters or greater than 0.5 millimeters.

The adhesive layer 1004 is EVA or other suitable adhesive. The adhesive layer 1004 couples the superstrate layer 1002 and reflective layer 1006 together. Further, the adhesive layer has a second index of refraction that is different than the first index of refraction of the superstrate layer 1002. In some embodiments, the difference between the first and second indexes of refraction is between 0.05 and 0.15. In other embodiments, the difference between the first and second indexes of refraction is less than 0.05 or greater than 0.15.

The mismatch between the first index of refraction of the superstrate layer 1002 and the second index of refraction of the adhesive layer 1004 combined with the stipple patter 1016 formed on the back surface 1014 of superstrate layer 1002 diffuses reflected light rays. For instance, Figure 9 illustrates two incoming parallel light rays 1018, 1020. Light ray 1018 is transmitted through the superstrate layer 1002 to point A near a valley of the stipple pattern 1016. Light ray 1018 is refracted at point A, reflected by the reflective layer 1006, and refracted again at point B, exiting the superstrate layer 1002 as reflected light ray 1018A at an angle θ*₁* relative to the front surface 1012 of superstrate layer 1002.

Light ray 1020 is transmitted through the superstrate layer 1002 to point C on a peak of the stipple pattern 1016. Light ray 1020 is refracted at point C, reflected by the reflective layer 1006, and refracted again at point D, exiting the superstrate layer 1002 as reflected light ray 1020A at an angle θ*₂* relative to the front surface 1012 of superstrate layer 1002.

Even though the light rays 1018, 1020 are parallel as they enter and are transmitted through the superstrate layer 1002, the light rays 1018, 1020 are incident on superstrate layer 1002-to-adhesive layer 1004 interfaces that are not parallel. Thus, the incident angle of the light ray 1018 at point A on the interface is different than the incident angle of the light ray 1020 at point C on the interface. As a result of these different incident angles at points A and C on the interface as well as the difference between the first and second indexes of refraction, the light ray 1018 is refracted a different amount at point A than the light ray 1020 is refracted at point C. For similar reasons, light rays 1018, 1020 undergo different amounts of refraction at points B and D on the interface.

Accordingly, the angle θ*₁* of the reflected light ray 1018A is different than the angle θ*₂* of the reflected light ray 1020A. In some embodiments, the angular difference Δθ between any pair of reflected light rays, such as light rays 1018A, 1020A, introduced by the reflector 1000 is between 1 and 4 degrees. In other embodiments, the angular difference Δθ is less than 1 degree or greater than 4 degrees.

The reflective layer 1006 is a spectrally selective film in some embodiments. In other embodiments, the reflective layer 1006 is not spectrally selective. Additional details regarding spectrally selective reflective layers are disclosed below.

The second adhesive layer 1008 is EVA or other suitable adhesive. The second adhesive layer 1008 couples the reflective layer 1008 and the backsheet 1010 together.

The backsheet 1010 is aluminum or other suitable material and provides environmental protection for the reflector 1000. Optionally, the backsheet 1010 is or includes a thermally emissive layer on its bottom surface 1022 having an emissivity greater than 0.6. In some embodiments, the relatively high emissivity of the backsheet 1010 enables the backsheet 1010 to absorb thermal radiation, essentially permitting the reflector 1000 to act as a heat sink to draw in thermal radiation emitted by an adjacent PV module 106 (Figure 1) when the reflector 1000 is arranged as a back-side reflector to the PV module 106.

### D. Specular Reflection Control

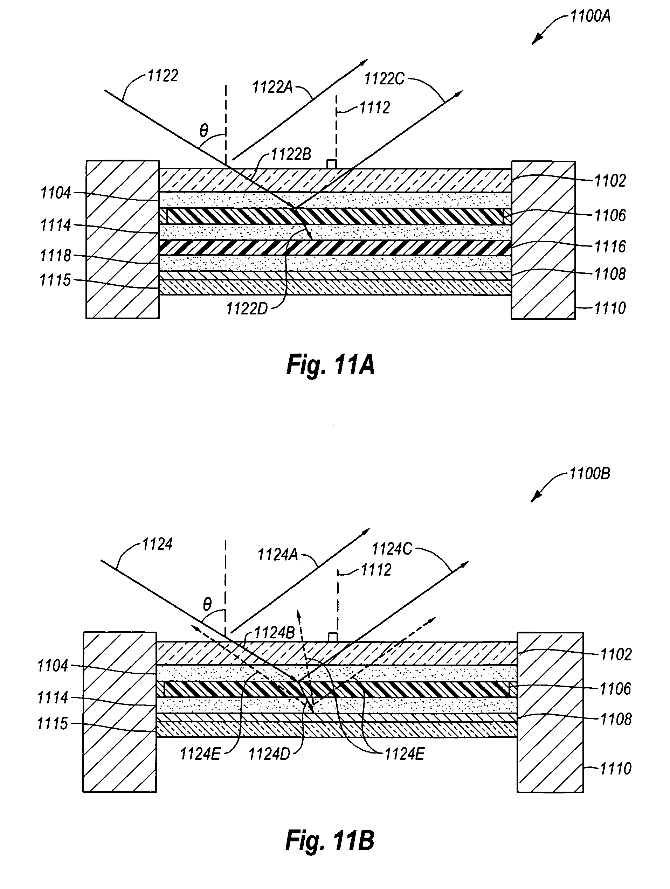

Figures 11A and 11B depict aspects of yet another example of non-concentrating and diffuse reflectors 1100A, 1100B such as may be implemented in the solar energy system 100 of Figure 1. The reflectors 1100A, 1100B each include a superstrate layer 1102, a first adhesive layer 1104, a spectrally selective reflective layer 1106, and a backsheet 1108. Optionally, the reflectors 1100A, 1100B include a frame 1110 to provide mechanical support for all of the layers of the reflectors 1100A, 1100B.

The superstrate layer 1102 is glass or other suitable material.

The first adhesive layer 1104 is EVA or other suitable adhesive. The first adhesive layer couples the superstrate layer 1102 and spectrally selective reflective layer 1106 together.

In some embodiments, the spectrally selective reflective layer 1106 is a series of varying refractive index plastic or similar material layers arranged in such a way to allow particular wavelengths to reflect and others to be transmitted. Optionally, each of the plastic layers is approximately ¼ wavelength thickness and the spectrally selective reflective layer 1106 includes approximately five-hundred (500) of these plastic layers. The index of refraction of each plastic layer may be controlled within each plastic layer by mechanically straining each of the plastic layers when interconnected. One example of a commercially-available film that can be implemented as the spectrally selective reflective layer 1106 is marketed by the 3M company as "cool film."

In the illustrated embodiment, the spectrally selective reflective layer 1106 is a film having one or more material layers that collectively function as an optical bandpass filter with a dependency on incident angle. In this and other examples, the spectrally selective reflective layer 1106 includes a stack of materials with varying indices of refraction, allowing relatively sharp bandpass filtering of reflected versus transmitted light.

Alternately or additionally, the spectrally selective reflective layer 1106 may include a modified dense wavelength division multiplexing ("DWDM") filter adapted to reflect a first predetermined wavelength band and to transmit a second predetermined wavelength band.

In the example of Figures 11A-11B, the spectrally selective reflective layer 1106 is configured to reflect light in a range from about 700 nanometers ("nm") to about 1350 nm at an incident angle of about 0 degrees. Note that incident angles are considered relative to a reference line 1112 that is substantially normal to the superstrate layer 1102 and/or spectrally selective reflective layer 1106 in the example of Figures 11A-11B.

The range of wavelengths reflected by the spectrally selective reflective layer 1106 is referred to herein as the "reflection band." The reflection band shifts downward as the incident angle increases. Specifically, at incident angles greater than 0 degrees, the light path of an incoming light ray in the spectrally selective reflective layer 1106 is longer than at 0 degrees, such that the reflected wavelengths are shifted downward compared to the reflected wavelengths at 0 degrees. According to some embodiments, the reflection band is about 600-1250 nm at a 45 degree incident angle, about 500-1150 nm at a 60 degree incident angle, and about 400-1000 nm at a 70 degree incident angle.

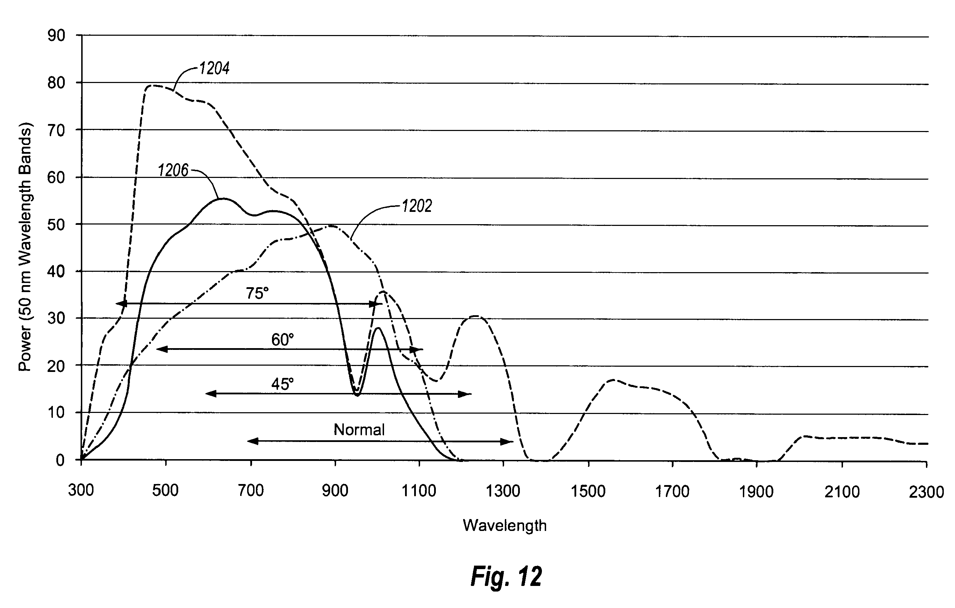

Figure 12 is a graph including a curve 1202 representing the quantum efficiency of an example PV material and a curve 1204 representing the AMU 1.5 solar spectrum. The PV material includes silicon in some examples and can be implemented in the PV cells 602 (Figure 6A) of the PV modules 106 (Figure 1) of solar energy system 100 (Figure 1) in some embodiments.

Alternately or additionally, the PV material includes a thin-film absorber such as copper indium gallium selenide ("CIGS"), amorphous silicon or cadmium telluride. In this and other examples, the wavelength selectivity of the spectrally selective reflective layer 1106 can be selected to match the response of the corresponding PV material.

Returning to Figure 12, and as best seen from curve 1202, the quantum efficiency of the PV material is at a maximum at about 900 nm. In contrast, and as best seen from curve 1204, the AMU 1.5 solar spectrum is at a maximum at just under 500 nm, and the AMU 1.5 solar spectrum further includes a large amount of relatively low energy photons, e.g., photons having a wavelength greater than about 1200 nm, that are of no value to the PV material.

Figure 12 further includes a curve 1206 representing a convolution of the curves 1202 and 1204. The curve 1206 essentially represents the useable energy that the PV material can extract from the AMU 1.5 solar spectrum.

Figure 12 additionally identifies four reflection bands 1208A-1208D for the spectrally selective reflective layer 1106 at 0-degree, 45-degree, 60-degree, and 70-degree incident angles, respectively. In the illustrated embodiment, and at the 0-degree incident angle, the spectrally selective reflective layer 1106 reflects approximately 60% of the useable energy from the AMU 1.5 solar spectrum. Further, at the 45-degree, 60-degree and 70-degree incident angles, the spectrally selective reflective layer 1106 reflects approximately, 70%, 85% and 92%, respectively, of the useable energy from the AMU 1.5 solar spectrum

Referring again to Figure 1, the PV modules 106 are generally aligned to face the sun. For instance, in the Northern Hemisphere, the PV modules 106 would be aligned to at least partially face southward. In contrast, the reflectors 108 are disposed opposing the PV modules 106 and facing at least partially northward so as to reflect light onto the PV modules 106. The earth's axial tilt relative to its orbital plane results in incoming light rays from the sun having a northward component in the northern hemisphere such that for a given static installation of a solar energy system 100 in the northern hemisphere, the incoming light rays will be incident on the reflectors 108 at some incident angle greater than 0 degrees.

Accordingly, by implementing the reflectors 108 in solar energy system 100 as reflectors 1100A, 1100B, the reflectors 108 can selectively reflect a limited reflection band that significantly overlaps the quantum efficiency band of the PV material in the PV modules 106, while absorbing or transmitting light having wavelengths outside the limited reflection band through the reflectors 108. Because the reflectors 108 in this example absorb or transmit a significant portion of the incoming light, they create less intense reflections than conventional reflectors and thus present less of an optical danger than conventional reflectors. The reflectors 108 in this example further present less of an optical nuisance, e.g., less light pollution, in the form of stray reflections.

Returning to Figures 11A-11B, the backsheet 1108 is aluminum or other suitable material and provides environmental protection for the reflectors 1100A, 1100B. In some embodiments, the backsheet 1108 includes an anisotropically textured front surface such as described above with respect to Figures 8A-8D. Alternately or additionally, the backsheet 1108 has a higher coefficient of thermal expansion than the superstrate layer 1102 and creates a crown such as described above with respect to Figures 7A-7B.

Both of the reflectors 1100A, 1100B further include a second adhesive layer 1114. The second adhesive layer 1114 is EVA or other suitable adhesive. In the example of Figure 11B, the second adhesive layer 1114 couples the spectrally selective reflective layer 1106 and the backsheet 1108 together.

Optionally, one or both of the reflectors 1100A, 1100B include an emissive layer 1115 coupled to a back surface of the backsheet 1108. The emissive layer 1115 is a thermally emissive layer such as black PET or other suitable material. The emissive layer 1115 has an emissivity greater than or equal to 0.6 in some embodiments. Alternately or additionally, the relatively high emissivity of the emissive layer 1115 enables the reflector 1100A, 1100B to absorb thermal radiation, essentially permitting the reflector 1100A, 1100B to act as a heat sink to draw in thermal radiation emitted by an adjacent PV module 106 (Figure 1) when the reflector 1100A, 1100B is arranged as a back-side reflector to the PV module 106.

Optionally, and with reference to Figure 11A, the reflector 1100A further includes a coloration layer 1116 and a third adhesive layer 1118. The coloration layer 1116 is coupled together with the spectrally selective reflective layer 1106 by the second adhesive layer 1114. In some embodiments, the coloration layer 1116 is co-extruded with the second and third adhesive layers 1118.

The coloration layer 1116 is polyethylene terephthalate ("PET"), poly methyl methacrylate ("PMMA"), Tedlar, other fluorinated material(s), or other suitable material using one or more pigments to achieve a desired color for the coloration layer 1116. The coloration layer 1116, in combination with the other layers of reflector 1100A, determines a visually perceptible color of the reflector 1100A when viewed from the front. For instance, the coloration layer 1116 in some embodiments is a layer of black PET or black PMMA such that the reflector 1100A appears to be aqua blue, cobalt blue, or a deep purple when viewed normally, or red-yellow when viewed from a large angle (e.g., greater than 45°) relative to the normal line 1112.

In this and other examples, light rays outside the reflection band of the spectrally selective reflective layer 1106 are transmitted through the spectrally selective reflective layer 1106 and their energy is absorbed by the coloration layer 1116. As indicated with respect to Figure 1, many of the light rays outside of the reflection band of the spectrally selective reflective layer 1106 are also outside of the quantum efficiency band of the corresponding PV material such that the impingement of these light rays on the PV material may generate heat without being converted into electricity. In the present example, however, rather than being reflected onto the corresponding PV and generating heat, the light rays outside of the reflection band are transmitted through the spectrally selective reflective layer 1106, absorbed by the coloration layer 1116, and their energy is turned into heat in the reflector 1100A.

For instance, Figure 11 A illustrates an incoming light beam 1122 made up of a plurality of wavelengths. A first portion of the light beam 1122 is reflected by the superstrate layer 1102 as first reflected portion 1122A. A second portion of the light beam 1122 penetrates the superstrate layer 1102 and first adhesive layer 1104 and is incident on the spectrally selective reflective layer 1106 at an incident angle θ relative to normal as first transmitted portion 1122B. Wavelengths of the first transmitted portion 1122B of the light beam 1122 within the reflection band of the spectrally selective reflective layer 1106 are reflected by the spectrally selective reflective layer 1106 as second reflected portion 1122C. Wavelengths of the first transmitted portion 1122B outside the reflection band of the spectrally selective reflective layer 1106 are transmitted through the spectrally selective reflective layer 1106 as second transmitted portion 1122D. The second transmitted portion 1122D of light beam 1122 is absorbed by the coloration layer 1116.

Alternately, the coloration layer 1116 in other embodiments is a layer of white PET (using titanium diode as the pigment in the PET), white PMMA, Tedlar, or other fluorinated materials such that the reflector 1100A appears to be yellow or light blue when viewed normally. In this and other examples, the second transmitted portion 1122D of light beam 1122 is diffusely reflected by the coloration layer 1116, which is white in this example. Some attenuation occurs near the short wavelength cut-off, such as when larger angular components of the diffuse light reflecting from the white background re-interact with the spectrally selective reflective layer 1106 at high angles such that some are internally captured as the spectrally selective reflective layer 1106 is now reflective in the reverse direction to these wavelengths.

The majority of the diffuse light rays reflected by the coloration layer 1116 in this example are transmitted back through the spectrally selective reflective layer 1106. Most of the transmitted light rays are directed away from an adjacent PV module, although some percentage of the transmitted light rays strike the PV module. In some embodiments, the percentage of transmitted light rays that strike the PV module is about 20%. The percentage of transmitted light rays that strike the PV module are usually outside the quantum efficiency band of the corresponding PV material, and thus tend to generate heat in the PV module.

As compared to the previous example in which the coloration layer 1116 is black and absorbs the light rays that are transmitted through the spectrally selective reflective layer 1106, the present example in which the coloration layer 1116 is white results in the reflector 1100A operating at a relatively cooler temperature than a reflector 1100A with a black coloration layer 1116. The present example also permits the reflector 1100A to absorb more thermal radiation from the back side of a PV module disposed behind reflector 1100A as compared to a hotter-running reflector 1100A with a black coloration layer 1116.

In some embodiments, the amount of direct sunlight incident on a PV module 106 (Figure 1) during a cloudless day is approximately 90% of the total light incident on the PV module 106, while the remaining 10% of the total light incident on the PV module 106 is diffuse light. In some examples, when a cloud passes in front of the sun, the percentage of diffuse light incident on the PV module 106 increases up to 20% or more. Further, under diffuse lighting conditions, the reflection band of the spectrally selective reflective layer 1106 shifts to higher wavelengths. Accordingly, by including a diffusely reflecting white coloration layer 1116 behind the spectrally selective reflective layer 1106, some of the diffuse lighting incident on the spectrally selective reflective layer 1106 is transmitted through the spectrally selective reflective layer 1106, diffusely reflected by the white coloration layer 1116, and transmitted back through the spectrally selective reflective layer 1106, whereupon a percentage of the transmitted light is incident on an adjacent PV module, even though the incoming light was normally incident on the reflector 1100A. Thus, by implementing a white coloration layer 1116 in the reflector 1100A, a greater portion of the normally incident lighting under cloudy conditions will ultimately be reflected onto the adjacent PV module, thereby increasing the reflection efficiency of the reflector 1100A under cloudy conditions as compared to some other reflector designs.

With continued reference to Figure 11 A, the third adhesive layer 1118 is EVA or other suitable adhesive. The third adhesive layer 1118 couples the coloration layer 1116 and backsheet 1108 together.

With reference to Figure 11B, in the illustrated embodiment, the backsheet 1108 includes an anisotropically textured front surface. As a result, the backsheet 1108 diffusely reflects any light transmitted through the spectrally selective reflective layer 1106.

In more detail, Figure 11B depicts an incoming light beam 1124 made up of a plurality of wavelengths. A first portion of the light beam 1124 is reflected by the superstrate layer 1102 as first reflected portion 1124A. A second portion of the light beam 1124 penetrates the superstrate layer 1102 and first adhesive layer 1104 and is incident on the spectrally selective reflective layer 1106 at an incident angle θ relative to normal as first transmitted portion 1124B. Wavelengths of the first transmitted portion 1124B of the light beam 1124 within the reflection band of the spectrally selective reflective layer 1106 are reflected by the spectrally selective reflective layer 1106 as second reflected portion 1124C. Wavelengths of the first transmitted portion 1124B outside the reflection band of the spectrally selective reflective layer 1106 are transmitted through the spectrally selective reflective layer 1106 as second transmitted portion 1124D. The second transmitted portion 1124D is then diffusely reflected by the anisotropically textured backsheet 1108 and transmitted back out of the reflector 1100B as third transmitted portion 1124E.

In some embodiments, the diffuse reflection of the second transmitted portion 1124D of light beam 1124 by anisotropically textured backsheet 1108 is similar in effect to the diffuse reflection of the second transmitted portion 1122D of light beam 1122 by a white coloration layer 1116 in the reflector 1100A of Figure 11A. Similarly, the majority of the diffusely reflected light rays are transmitted back through the spectrally selective layer 1106 and away from an adjacent PV module, although some percentage of transmitted light rays strike the PV module, such as about 20% in some examples.

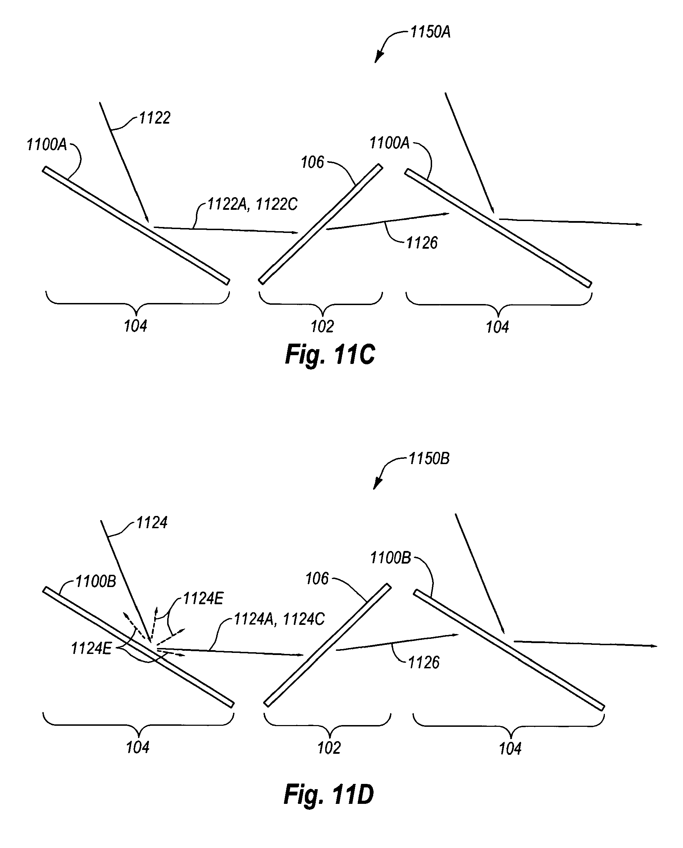

With additional reference to Figures 11C-11D, two example solar energy systems 1150A, 1150B are disclosed in which the reflectors 1100A, 1100B can be implemented. Each of solar energy systems 1150A, 1150B is similar to the solar energy system 100 of Figure 1, and includes one or more module rows 102 and one or more reflector rows 104. Each module row 102 includes a plurality of PV modules 106. Each reflector row 104 includes a plurality of reflectors 1100A in the example of Figure 11C, or a plurality of reflectors 1100B in the example of Figure 11D. In each of Figures 11C and 11D, the reflector 1100A, 1100B to the left of the PV module 106 is a front-side reflector 1100A, 1100B, and the reflector 1100A, 1100B to the right of the PV module 106 is a back-side reflector 1100A, 1100B.

Figure 11C further illustrates the light beam 1122, as well as the first and second reflected portions 1122A, 1122C of light beam 1122 which are reflected from front-side reflector 1100A to PV module 106.

Figure 11D similarly illustrates the light beam 1124, as well as the first and second reflected portions 1124A, 1124C of light beam 1124. Figure 11D further illustrates the third transmitted portion 1124E diffusely reflected by the anisotropically textured backsheet 1108 (Figure 11B).

In the illustrated embodiments of Figures 11C and 11D, the PV modules 106 generate thermal energy during operation, some of which thermal energy is radiated out the back side of the PV modules 106 towards the back of each back-side reflector 1100A, 1100B shown on the right of Figures 11C and 11D. The thermal radiation is represented in Figures 11C and 11D by arrow 1126. At least some of thermal radiation 1126 is absorbed by back-side reflectors 1100A, 1100B via emissive layer 1115, thereby drawing the thermal radiation 1126 away from the back of the PV modules 106 to facilitate cooling of the PV modules 106.

Returning to Figures 11 A and 11 B, the edges of the spectrally selective reflective layer 1106 optionally terminate prior to the edges of the first and second adhesive layers 1104, 1114 to improve sealing. Further, the spectrally selective reflective layer 1106 is environmentally protected by being sealed within the reflectors 1100A, 1100B between the superstrate layer 1102, the backsheet 1108, and the frame 1110.

Alternately or additionally, the reflection band of the spectrally selective reflective layer 1106 excludes a significant portion of the ultraviolet ("UV") spectrum, e.g., about 10 nm to 400 nm and/or a significant portion of the infrared ("IR") spectrum, e.g., about 750 nm to 10 micrometers. The exclusion of the UV spectrum from the reflection band limits the amount of UV radiation that strikes a corresponding PV module 106, thereby improving the environmental robustness of the PV module 106 compared to arrangements in which a reflector reflects the UV spectrum onto a PV module. The exclusion of the IR spectrum from the reflection band limits the amount of IR radiation (e.g., mostly heat) that strikes a corresponding PV module 106, also improving the environmental robustness of the PV module 106.

The reflector configurations described above with respect to Figures 7A-8D and 10-11B can be modified or combined in any manner to obtain a non-concentrating reflector suitable for use in some embodiments of the solar energy systems 100, 1150A, 1150B of Figures 1 and 11C-11D. For example, the crowning described with respect to Figures 7A-7B can be implemented alone or in combination with one or more of anisotropic surface texturing (Figures 8A-8D), stippling (Figure 10) or specular reflection control (Figures 11A-11B). Alternately or additionally, the anisotropic surface texturing described with respect to Figures 8A-8D can be implemented alone or in combination with one or more of crowning (Figures 7A-7B), stippling (Figure 10) or specular reflection control (Figures 11A-11B). Alternately or additionally, the stippling described with respect to Figure 10 can be implemented alone or in combination with one or more of crowning (Figures 7A-7B), anisotropic surface texturing (Figures 8A-8D) or specular reflection control (Figures 11 A-11 B). Alternately or additionally, the specular reflection control described with respect to Figures 11A-11B can be implemented alone or in combination with one or more of crowning (Figures 7A-7B), anisotropic surface texturing (Figures 8A-8D) or stippling (Figure 10).

### IV. ANOTHER EXAMPLE SOLAR ENERGY SYSTEM

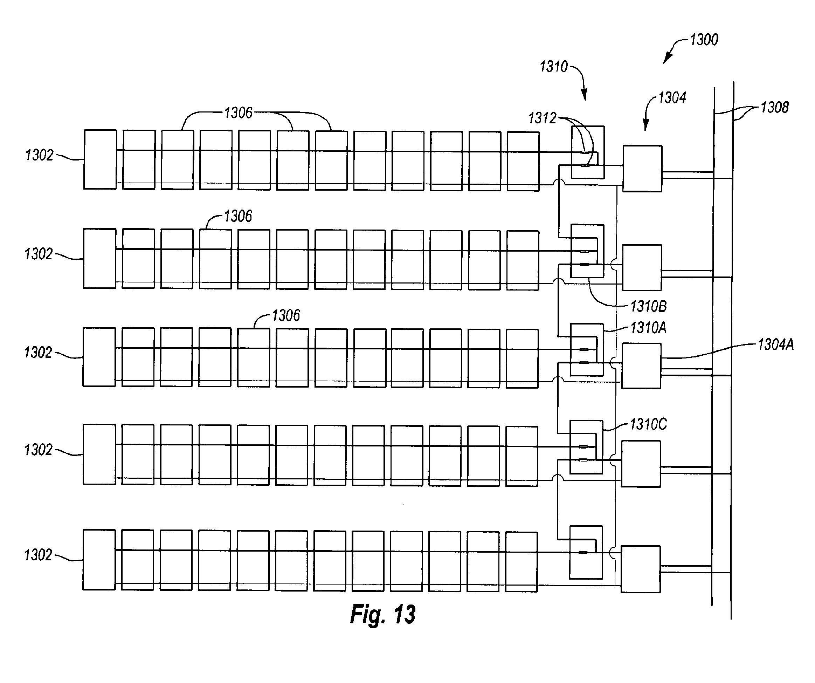

With additional reference to Figure 13, another example solar energy system 1300 is disclosed according to some embodiments. In more detail, Figure 13 illustrates a simplified schematic of the solar energy system 1300. The solar energy system 1300 is similar in some respects to the solar energy system 100 of Figure 1, and includes a plurality of module rows 1302 and a plurality of inverters 1304.

Each of the module rows 1302 includes a plurality of PV modules 1306. The PV modules 1306 within each module row 1302 are connected in parallel to each other. Further, each of PV modules 1306 is configured substantially identically to the PV modules 106 described above. For instance, each of PV modules 1306 includes a plurality of PV cells arranged in a plurality of PV cell rows, where the PV cells in each cell row are electrically connected in parallel to each other, and the cell rows are electrically connected in series to each other.

Further, in some embodiments, each of PV modules 1306 is configured to independently control maximum peak power and output voltage independently of the other PV modules 1306 in the solar energy system 1300. Alternately or additionally, each of PV modules 1306 is configured to operate in constant current mode under some conditions such as when the production capacity of PV modules 1306 is below inverter 1304 capacity, or to transition to operation in constant voltage mode under other conditions such as when one or more of inverters 1304 has failed or the inverter 1304 capacity has otherwise fallen below the production capacity of the PV modules 1306.

In the illustrated embodiment of Figure 13, the solar energy system 1300 has a 1:1 inverter 1304-to-module row 1302 ratio. As such, each inverter 1304 is electrically connected to a corresponding module row 1302 and is configured to receive a DC input collectively generated by the PV modules 1306 in the corresponding module row 1302. Similar to the inverters 110 of Figure 1, the inverters 1304 are configured to convert the DC input to AC output which is fed into AC lines 1308. The inverters 1304 are low-voltage inverters in some embodiments, e.g., each of the inverters 1304 is configured to receive DC input having a voltage of between about 50 volts and 60 volts. In other embodiments, the inverters 1304 are configured to receive DC input having a voltage of less than 50 volts or greater than 60 volts.

Further, in some embodiments, each of inverters 1304 is rated at about 5 kilowatt ("kW"). Alternately or additionally, each of inverters 1304 is rated between about 3 kW to 20 kW. Alternately or additionally, each inverter 1304 is rated for less than 3 kW or greater than 20 kW.

With continued reference to Figure 13, the solar energy system 1300 further includes a plurality of selector circuits 1310. Each selector circuit 1310 is electrically connected between a corresponding module row 1302 and inverter 1304. Additionally, the selector circuits 1310 are electrically connected to each other. Generally, each selector circuit 1310 is configured to re-route the DC input of a corresponding inverter 1304 to one or more of the other inverters 1304 in the event that the corresponding inverter 1304 fails. For instance, in the event that inverter 1304A fails, selector circuit 1310A is configured to re-route the DC input of inverter 1304A to the other inverters 1304 via at least selector circuits 1310B, 1310C.

Alternately or additionally, the selector circuits 1310 can be employed to maximize efficiency of the solar energy system 1300 during a start-up sequence and/or low-illumination days. For instance, the start values, e.g., operating setpoints, of each of inverters 1304 are set independently such that only one of inverters 1304 starts initially until a certain amount of power is being generated by the solar energy system 1300. During this time, the selector circuits 1310 route power to the initially started inverter 1304. Then, additional inverters 1304 start up as the power output of the solar energy system 1300 reaches one or more predetermined thresholds. In some embodiments, whereas conversion efficiency of the inverters 1304 is relatively lower at lower power levels, e.g., less than about 500 watts ("W"), the conversion efficiency is improved by only bringing inverters 1304 online when needed to handle the increased power output that is at an efficient level for the inverters 1304.

Each of selector circuits 1310 is a 2-pole disconnect box, or other suitable selector circuit. Alternately or additionally, each of selector circuits 1310 includes one or more fuses 1312. In some embodiments, each of fuses 1312 is at least a 100 amp ("A") fuse.

In the embodiment of Figure 13, each of the inverters 1304 is connected to a corresponding module row 1302. More generally, each of the inverters 1304 is connected to a group of PV modules 1306, where the rated capacity of each inverter 1304 is greater than or equal to the cumulative rated output of the PV modules 1306 in the corresponding group, and all of the PV Modules 1306 within each group are electrically connected in parallel. Thus, in a solar energy system that includes inverters 1304 rated at 5 kW and a relatively small number of PV modules 1306 per module row 1302, e.g., six (6) PV modules 1306 per module row 1302, each inverter 1304 may be connected to a group of twenty (20) or more PV modules 1306 electrically connected in parallel and spanning over three module rows 1302. As another example, Figure 1 depicts a solar energy system 100 in which each inverter 110 is connected to two (2) module rows 102 of twelve (12) PV modules 106 each.

Furthermore, in examples in which the PV modules 1306 are divided into groups in which all the PV modules 1306 in a group are connected in parallel, each selector circuit 1310 is electrically connected between the group of PV modules 1306 and the corresponding inverter 1304, while the selector circuits 1310 are additionally connected to each other.

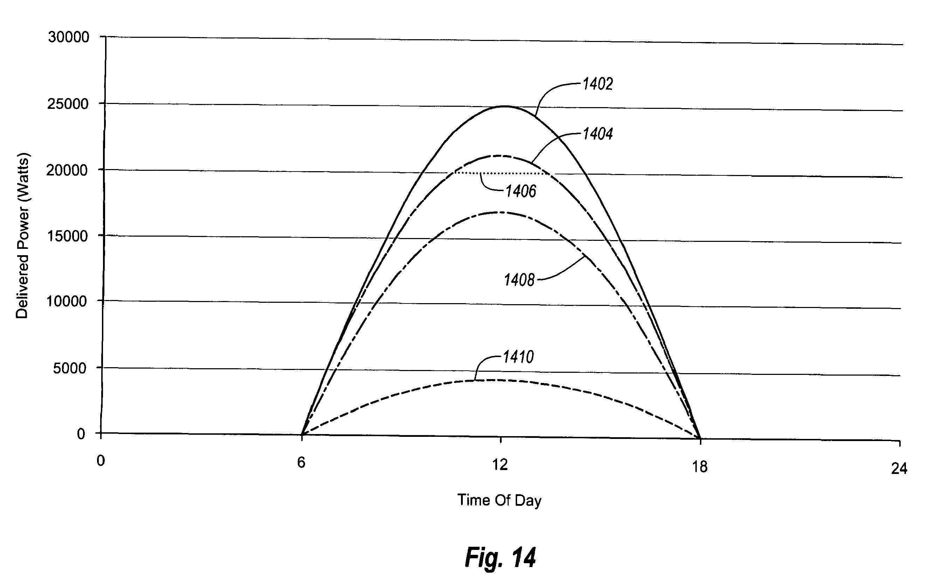

Figure 14 is a graph comparing the performance of various solar energy systems, under a variety of conditions. Specifically, Figure 14 includes a plurality of curves 1402, 1404, 1406, 1408, 1410. The first curve 1402 represents the power delivery throughout the day of a solar energy system having five module rows, each module row rated at 5 kW, and 5 inverters, each connected to a corresponding module row, with no back-end losses and optimally aligned at equinox.

The second curve 1404 represents the power delivery throughout the day of the same solar energy system corresponding to the first curve 1402, except that the system experiences about 12% back-end loss, mostly due to temperature increases in the PV modules within the five module rows.

The third and fourth curves 1406, 1408 represent the power delivery throughout the day of the same solar energy system corresponding to the second curve 1404 under 12% back-end loss where one of the five inverters has failed. All five inverters in the solar energy system corresponding to the third curve 1406 are redundantly interconnected in the configuration of Figure 13. As such, the DC input to the failed inverter is re-routed to the remaining inverters. As can be seen by comparing second and third curves 1404, 1406, the failure of a single inverter when all of the inverters are redundantly interconnected has minimal impact on the power delivery of the solar energy system.

In contrast, the solar energy system corresponding to fourth curve 1408 includes inverters that are not redundantly interconnected. Thus, when one of the five inverters fails, the solar energy system corresponding to the fourth curve 1408 experiences a much larger drop in output than in the solar energy system corresponding to third curve 1406.

Finally, fifth curve 1410 represents the power delivery throughout the day of a solar energy system having a single module row rated at 5 kW with a single inverter and 5% back-end loss.

The present invention may be embodied in other specific forms. The described embodiments are to be considered in all respects only as illustrative and not restrictive. The scope of the invention is, therefore, indicated by the appended claims rather than by the foregoing description.

## Claims

1. A solar energy system, comprising:
- a plurality of module rows (102), each module row (102) including a plurality of photovoltaic modules (106), wherein each photovoltaic module (106) includes a plurality of photovoltaic cells (602) arranged in a plurality of cell rows (606):
- a plurality of reflector rows (104), each reflector row (104) including a plurality of reflectors (108; 700; 800; 1000; 1100A, 1100B), the plurality of reflector rows (104) being interposed between the plurality of module rows (102) such that each reflector row (104) is mechanically interconnected between two adjacent module rows (102) and is arranged to reflect light having some incident angles on to one of the two adjacent module rows (102),
**characterised in that**
- the photovoltaic cells (602) in each cell row (606) are electrically connected in parallel to each other, and the plurality of cell rows (606) are electrically connected in series to each other; and that each photovoltaic module (106) further includes:
- a rectangular frame (209) including a frame extension (209A-209D) extending from each of four corners of the corresponding photovoltaic module (106), two of the frame extensions (209A-209D) at a top (206) of the corresponding photovoltaic module (106) extending to a height above an upper edge of the frame (209); and
- a power conversion device (616) electrically connected in series with the plurality of cell rows (606).

2. The solar energy system of claim 1, wherein each reflector (108; 700; 800; 1000; 1100A, 1100B) includes a substantially rectangular frame (210) with frame extensions (210A-210D) extending from each of its four corners, two of the frame extensions (210A-210D) at a top of each photovoltaic module (106, 1306) being mechanically connected to two of the frame extensions (210A-210D) at a top (207) of a corresponding reflector (108; 700; 800; 1000; 1100A, 1100B) disposed behind each photovoltaic module.

3. The solar energy system of claim 1, further comprising a plurality of rail assemblies (112) arranged substantially orthogonal to the plurality of module rows (102) and plurality of reflector rows (104), wherein each of the plurality of module rows (102) and plurality of reflector rows (104) includes a base (204, 205), the bases (204, 205) being attached to the plurality of rail assemblies (112).

4. The solar energy system of claim 3, wherein each rail assembly (112) includes a plurality of rails (202) and a plurality of fins (212) adjustably attached to the plurality of rails (202), an attachment position of each fin (212) being adjustable along a length of a corresponding rail (202), the bases (204, 205) of the plurality of module rows (106) and plurality of reflector rows (104) being directly attached to the plurality of fins (212).

5. The solar energy system of claim 4, wherein a longitudinal spacing of the fins (212) along lengths of the rails (202) can be varied depending on one or more factors of an installation location, including latitude, snow, climate conditions, or surface conditions of the installation location.

6. The solar energy system of claim 4, further comprising a plurality of rail-to-rail interconnects (216, 402) electrically and mechanically connecting each rail (202A, 202B, 202) to a longitudinally adjacent rail (202A, 202B, 202) within each rail assembly 112.

7. The solar energy system of claim 1, wherein each of the reflectors comprises a non-concentrating and diffuse reflector (108; 700; 800; 1000; 1100A, 1100B).

8. The solar energy system of claim 7, wherein each of the non-concentrating and diffuse reflectors (700; 800) comprises:
- a superstate layer (702) having a first coefficient of thermal expansion;
- a metal backsheet (704) having a second coefficient of thermal expansion that is greater than the first coefficient of thermal expansion; and
- an adhesive layer (706) disposed between the superstrate layer (702) and the metal backsheet (704);
wherein the superstrate layer (702), metal backsheet (704) and adhesive layer (706) are laminated together at a first temperature and cooled to a second temperature lower than the first temperature such that the superstrate layer (702), metal backsheet (704) and adhesive layer (706) form a convex reflector (700; 800) after cooling to the second temperature.

9. The solar energy system of claim 7, wherein each of the non-concentrating and diffuse reflectors (800) comprises a reflective layer (802) having an anisotropic surface texture configured to diffusely reflect light rays incident thereon.

10. The solar energy system of claim 7, wherein each of the non-concentrating and diffuse reflectors (1000) comprises:
- a superstrate layer (1002) having a front surface (1012) and a back surface (1014), a stipple pattern (1016) being formed on the back surface (1014), the superstrate layer (1002) having a first index of refraction;
- a reflective layer (1006); and
- an adhesive layer (1004) disposed between the superstrate layer (1002) and the reflective layer (1006), the adhesive layer (1004) having a second index of refraction that is different than the first index of refraction.

11. The solar energy system of claim 7, wherein each of the non-concentrating and diffuse reflectors (1100A, 1100B) comprises a spectrally selective reflective layer (1106) with a dependency on incident angle.

12. The solar energy system of claim 11, wherein a reflection band of the spectrally selective reflective layer (1106) is approximately 700-1350 nanometers at a substantially normal incident angle, approximately 600-1250 nanometers at a 45 degree incident angle from normal, approximately 500-1150 nanometers at a 60 degree incident angle from normal, and about 400-1000 nanometers at a 70 degree incident angle from normal.

13. The solar energy system of claim 11, wherein each of the non-concentrating and diffuse reflectors (1100A) further comprises a black coloration layer (1116) disposed behind the spectrally selective reflective layer (1106), the black coloration layer (1116) configured to absorb energy of light rays transmitted through the spectrally selective reflective layer (1106) or wherein each of the non-concentrating and diffuse reflectors (1100A) further comprises a white coloration layer (1116) disposed behind the spectrally selective reflective layer (1106), the white coloration layer (1116) configured to diffusely reflect light rays transmitted through the spectrally selective reflective layer (1106).

14. The solar energy system of claim 1, wherein each of the reflectors (1100A, 1100B) comprises:
- a backsheet (1108) having a back surface disposed opposite a back surface of a photovoltaic module (106) in an adjacent module row; and
- an emissive layer (1115) laminated to the back surface of the backsheet (1108), the emissive layer (1115) having an emissivity greater than or equal to 0.6.

15. A solar energy system, comprising a plurality of photovoltaic modules (1306) divided into a plurality of groups **characterised by**
- the photovoltaic modules (1306) within each of the plurality of groups being electrically connected in parallel to each other, wherein each photovoltaic modules (1306) includes: a plurality of photovoltaic cells (602) arranged in a plurality of cell rows (606), the photovoltaic cells (602) in each cell row (606) being electrically connected in parallel to each other, and the plurality of cell rows (606) being electrically connected in series to each other;
- a plurality of low-voltage inverters (1304), each low-voltage inverter (1304) being electrically connected to a corresponding group of photovoltaic modules to receive direct current input generated by the photovoltaic modules (1306) in the corresponding group; and
- a plurality of selector circuits (1310), each selector circuit (1310) being electrically connected between a corresponding group of photovoltaic modules and low-voltage inverter (1304), the selector circuits (1310) being further connected to each other such that the direct current input of each low-voltage inverter (1304) is re-routable to one or more of the other low-voltage inverters (1304) in the event of a failure of an inverter (1304).

## Patentansprüche

1. Solaranlage, umfassend:
- eine Vielzahl von Modulreihen (102), wobei jede Modulreihe (102) eine Vielzahl von Photovoltaikmodulen (106) umfasst und wobei jedes Photovoltaikmodul (106) eine Vielzahl von Photovoltaikzellen (602) umfasst, die in einer Vielzahl von Zellenreihen (606) angeordnet sind,
- eine Vielzahl von Reflektorreihen (104), wobei jede Reflektorreihe (104) eine Vielzahl von Reflektoren (108; 700; 800; 1000; 1100A, 1100B) umfasst, wobei die Vielzahl von Reflektorreihen (104) zwischen der Vielzahl von Modulreihen (102) angeordnet sind, so dass jede Reflektorreihe (104) mechanisch mit zwei benachbarten Modulreihen (102) verbunden ist und so angeordnet ist, dass sie Licht mit gewissen Einfallswinkeln auf eine der beiden benachbarten Modulreihen (102) reflektiert,
**dadurch gekennzeichnet, dass**
die Photovoltaikzellen (602) in jeder Zellenreihe (606) elektrisch miteinander parallelgeschaltet sind und die Vielzahl von Zellenreihen (606) elektrisch miteinander in Reihe geschaltet sind; und dass jedes Photovoltaikmodul (106) des Weiteren Folgendes umfasst:
- einen rechteckigen Rahmen (209), der einen Rahmenfortsatz (209A-209D) umfasst, der sich von jeder der vier Ecken des entsprechenden Photovoltaikmoduls (106) erstreckt, wobei sich zwei der Rahmenfortsätze (209A-209D) an einem oberen Ende (206) des entsprechenden Photovoltaikmoduls (106) bis zu einer Höhe oberhalb einer Oberkante des Rahmens (209) erstrecken; und
- eine Energieumwandlungsvorrichtung (616), die mit der Vielzahl von Zellenreihen (606) elektrisch in Reihe geschaltet ist.

2. Solaranlage nach Anspruch 1, wobei jeder Reflektor (108; 700; 800; 1000; 1100A; 1100B) einen im Wesentlichen rechteckigen Rahmen (210) mit Rahmenfortsätzen (210A-210D) umfasst, die sich von jeder seiner vier Ecken erstrecken, wobei zwei der Rahmenfortsätze (210A-210D) an einem oberen Ende jedes Photovoltaikmoduls (106, 1306) mechanisch mit zwei der Rahmenfortsätze (210A-210D) an einem oberen Ende (207) eines entsprechenden, hinter jedem Photovoltaikmodul angeordneten Reflektors (108; 700; 800; 1000; 1100A, 1100B) verbunden sind.

3. Solaranlage nach Anspruch 1, ferner umfassend eine Vielzahl von Schienenbaugruppen (112), die im Wesentlichen orthogonal zu der Vielzahl von Modulreihen (102) und der Vielzahl von Reflektorreihen (104) angeordnet sind, wobei jede der Vielzahl von Modulreihen (102) und Vielzahl von Reflektorreihen (104) eine Basis (204, 205) aufweist, wobei die Basen (204, 205) an der Vielzahl von Schienenbaugruppen (112) befestigt sind.

4. Solaranlage nach Anspruch 3, wobei jede Schienenbaugruppe (112) eine Vielzahl von Schienen (202) und eine Vielzahl von Finnen (212) aufweist, die verstellbar an der Vielzahl von Schienen (202) befestigt sind, wobei eine Befestigungsposition jeder Finne (212) entlang der Länge einer entsprechenden Schiene (202) verstellbar ist und die Basen (204, 205) der Vielzahl von Modulreihen (106) und Vielzahl von Reflektorreihen (104) direkt an der Vielzahl von Finnen (212) befestigt sind.

5. Solaranlage nach Anspruch 4, wobei ein Längsabstand der Finnen (212) entlang der Länge der Schienen (202) in Abhängigkeit von einem oder mehreren Faktoren eines Aufstellungsortes, wie zum Beispiel Breitengrad, Schnee, klimatische Bedingungen oder Oberflächenbedingungen des Aufstellungsortes, verändert werden kann.

6. Solaranlage nach Anspruch 4, ferner umfassend eine Vielzahl von Schienenverbindungselementen (216, 402), die jede Schiene (202A, 202B, 202) elektrisch und mechanisch mit einer in Längsrichtung angrenzenden Schiene (202A, 202B, 202) innerhalb jeder Schienenbaugruppe (112) verbinden.

7. Solaranlage nach Anspruch 1, wobei jeder der Reflektoren einen nicht konzentrierenden und diffus reflektierenden Reflektor (108; 700; 800; 1000; 1100A, 1100B) umfasst.

8. Solaranlage nach Anspruch 7, wobei jeder der nicht konzentrierenden und diffus reflektierenden Reflektoren (700; 800) Folgendes umfasst:
- eine Superstratschicht (702) mit einem ersten Wärmeausdehnungskoeffizienten;
- eine rückseitige Metallfolie (704) mit einem zweiten Wärmeausdehnungskoeffizienten, der größer ist als der erste Wärmeausdehnungskoeffizient; und
- eine Klebstoffschicht (706), die zwischen der Superstratschicht (702) und der rückseitigen Metallfolie (704) angeordnet ist;
wobei die Superstratschicht (702), die rückseitige Metallfolie (704) und die Klebstoffschicht (706) bei einer ersten Temperatur aufeinanderkaschiert werden und auf eine zweite Temperatur abgekühlt werden, die niedriger ist als die erste Temperatur, so dass die Superstratschicht (702), die rückseitige Metallfolie (704) und die Klebstoffschicht (706) nach dem Abkühlen auf die zweite Temperatur einen konvexen Reflektor (700; 800) bilden.

9. Solaranlage nach Anspruch 7, wobei jeder der nicht konzentrierenden und diffus reflektierenden Reflektoren (800) eine reflektierende Schicht (802) mit einer anisotropen Oberflächentextur umfasst, die dazu ausgelegt ist, darauf einfallende Lichtstrahlen diffus zu reflektieren.

10. Solaranlage nach Anspruch 7, wobei jeder der nicht konzentrierenden und diffus reflektierenden Reflektoren (1000) Folgendes umfasst:
- eine Superstratschicht (1002) mit einer Vorderseite (1012) und einer Rückseite (1014), wobei auf der Rückseite (1014) ein punktiertes Muster (1016) ausgebildet ist und wobei die Superstratschicht (1002) einen ersten Brechungsindex besitzt;
- eine reflektierende Schicht (1006); und
- eine Klebstoffschicht (1004), die zwischen der Superstratschicht (1002) und der reflektierenden Schicht (1006) angeordnet ist, wobei die Klebstoffschicht (1004) einen zweiten Brechungsindex besitzt, der von dem ersten Brechungsindex verschieden ist.

11. Solaranlage nach Anspruch 7, wobei jeder der nicht konzentrierenden und diffus reflektierenden Reflektoren (1100A, 1100B) eine spektralselektive reflektierende Schicht (1106) mit einer Abhängigkeit vom Einfallswinkel umfasst.

12. Solaranlage nach Anspruch 11, wobei ein Reflexionsband der spektralselektiven reflektierenden Schicht (1106) ungefähr 700-1350 Nanometer bei einem im Wesentlichen normalen Einfallswinkel, ungefähr 600-1250 Nanometer bei einem 45 Grad von der Normalen abweichenden Einfallswinkel, ungefähr 500-1150 Nanometer bei einem 60 Grad von der Normalen abweichenden Einfallswinkel und etwa 400-1000 Nanometer bei einem 70 Grad von der Normalen abweichenden Einfallswinkel beträgt.

13. Solaranlage nach Anspruch 11, wobei jeder der nicht konzentrierenden und diffus reflektierenden Reflektoren (1100A) ferner eine schwarz gefärbte Schicht (1116) umfasst, die hinter der spektralselektiven reflektierenden Schicht (1106) angeordnet ist, wobei die schwarz gefärbte Schicht (1116) dazu ausgelegt ist, Energie von Lichtstrahlen zu absorbieren, die durch die spektralselektive reflektierende Schicht (1106) hindurchgelassen wurden, oder wobei jeder der nicht konzentrierenden und diffus reflektierenden Reflektoren (1100A) ferner eine weiß gefärbte Schicht (1116) umfasst, die hinter der spektralselektiven reflektierenden Schicht (1106) angeordnet ist, wobei die weiß gefärbte Schicht (1116) dazu ausgelegt ist, Lichtstrahlen diffus zu reflektieren, die durch die spektralselektive reflektierende Schicht (1106) hindurchgelassen wurden.

14. Solaranlage nach Anspruch 1, wobei jeder der Reflektoren (1100A, 1100B) Folgendes umfasst:
- eine rückseitige Folie (1108) mit einer Rückseite, die einer Rückseite eines Photovoltaikmoduls (106) in einer benachbarten Modulreihe gegenüberliegt; und
- eine emittierende Schicht (1115), die auf die Rückseite der rückseitigen Folie (1108) kaschiert ist, wobei die emittierende Schicht (1115) ein Emissionsvermögen größer oder gleich 0,6 besitzt.

15. Solaranlage, umfassend eine Vielzahl von Photovoltaikmodulen (1306), die in eine Vielzahl von Gruppen unterteilt sind,
**dadurch gekennzeichnet, dass**
- die Photovoltaikmodule (1306) innerhalb jeder der Vielzahl von Gruppen elektrisch miteinander parallelgeschaltet sind, wobei jedes Photovoltaikmodul (1306) Folgendes umfasst: eine Vielzahl von Photovoltaikzellen (602), die in einer Vielzahl von Zellenreihen (606) angeordnet sind, wobei die Photovoltaikzellen (602) in jeder Zellenreihe (606) elektrisch miteinander parallelgeschaltet sind, und die Vielzahl von Zellenreihen elektrisch miteinander in Reihe geschaltet sind;
und dass die Solaranlage ferner Folgendes umfasst:
- eine Vielzahl von Niederspannungsinvertern (1304), wobei jeder Niederspannungsinverter (1304) mit einer entsprechenden Gruppe von Photovoltaikmodulen elektrisch verbunden ist, um einen Gleichstromeingang aufzunehmen, der durch die Photovoltaikmodule (1306) in der entsprechenden Gruppe erzeugt wurde; und
- eine -vielzahl von Selektorschaltungen (1310), wobei jede Selektorschaltung (1310) elektrisch mit einer entsprechenden Gruppe von Photovoltaikmodulen und dem Niederspannungsinverter (1304) verbunden ist, wobei die Selektorschaltungen (1310) ferner so miteinander verbunden sind, dass der Gleichstromeingang jedes Niederspannungsinverters (1304) bei einem Ausfall eines Inverters (1304) zu einem oder mehreren der anderen Niederspannungsinverter (1304) umgeleitet werden kann.

## Revendications

1. Système d'énergie solaire, comprenant :
- une pluralité de rangées de modules (102), chaque rangée de modules (102) comportant une pluralité de modules photovoltaïques (106), dans lequel chaque module photovoltaïque (106) comporte :
- une pluralité de cellules photovoltaïques (602) agencées en une pluralité de rangées de cellules (606),
- une pluralité de rangées de réflecteurs (104), chaque rangée de réflecteurs (104) comportant une pluralité de réflecteurs (108 ; 700 ; 800 ; 1000 ; 1100A, 1100B), la pluralité de rangées de réflecteurs (104) étant interposée entre la pluralité de rangées de modules (102) de sorte que chaque rangée de réflecteurs (104) soit interconnectée mécaniquement entre deux rangées de modules adjacentes (102) et soit agencée pour réfléchir une lumière ayant des angles incidents sur l'une des deux rangées de modules adjacentes (102), **caractérisé en ce que**
les cellules photovoltaïques (602) dans chaque rangée de cellules (606) sont raccordées électriquement en parallèle les unes aux autres, et la pluralité de rangées de cellules (606) sont connectées électriquement en série les unes aux autres ; et **en ce que** chaque module photovoltaïque (106) comporté en outre :
- un châssis rectangulaire (209) comportant une extension de châssis (209A à 209D) s'étendant depuis chacun des quatre coins du module photovoltaïque (106) correspondant, deux des extensions de châssis (209A à 209D) au niveau d'une partie haute (206) du module photovoltaïque (106) correspondant s'étendant jusqu'à une hauteur au-dessus d'un bord supérieur du châssis (209) ; et
- un dispositif de conversion de puissance (616) raccordé électriquement en série à la pluralité de rangées de cellules (606).

2. Système d'énergie solaire selon la revendication 1, dans lequel chaque réflecteur (108 ; 700 ; 800 ; 1000 ; 1100A, 1100B) comporte un châssis sensiblement rectangulaire (210) avec des extensions de châssis (210A à 210D) s'étendant depuis chacun de ses quatre coins, deux des extensions de châssis (210A à 210D) au niveau d'une partie haute de chaque module photovoltaïque (106, 1306) étant raccordées mécaniquement à deux des extensions de châssis (210A à 210D) au niveau d'une partie haute (207) d'un réflecteur correspondant (108 ; 700; 800; 1000; 1100A, 1100B) disposé derrière chaque module photovoltaïque.

3. Système d'énergie solaire selon la revendication 1, comprenant en outre une pluralité d'ensembles de rails (112) agencés sensiblement orthogonaux à la pluralité de rangées de modules (102) et la pluralité de rangées de réflecteurs (104), dans lequel chacune de la pluralité de rangées de modules (102) et de la pluralité de rangées de réflecteurs (104) comporte une base (204, 205), les bases (204, 205) étant fixées à la pluralité d'ensembles de rails (112).

4. Système d'énergie solaire selon la revendication 3, dans lequel chaque ensemble de rails (112) comporte une pluralité de rails (202) et une pluralité d'ailettes (212) fixées avec capacité de réglage à la pluralité de rails (202), une position de fixation de chaque ailette (212) étant réglable suivant une longueur d'un rail correspondant (202), les bases (204, 205) de la pluralité de rangées de modules (106) et la pluralité de rangées de réflecteurs (104) étant fixées directement à la pluralité d'ailettes (212).

5. Système d'énergie solaire selon la revendication 4, dans lequel un espacement longitudinal des ailettes (212) suivant des longueurs des rails (202) peut être varié selon un ou plusieurs facteurs d'un emplacement d'installation, y compris la latitude, la neige, les conditions climatiques, ou les conditions de surface de l'emplacement d'installation.

6. Système d'énergie solaire selon la revendication 4, comprenant en outre une pluralité d'interconnecteurs rail à rail (216, 402) raccordant électriquement et mécaniquement chaque rail (202A, 202B, 202) à un rail adjacent longitudinalement (202A, 202B, 202) dans chaque ensemble de rails (112).

7. Système d'énergie solaire selon la revendication 1, dans lequel chacun des réflecteurs comprend un réflecteur non-concentrateur et diffus (108 ; 700 ; 800 ; 1000 ; 1100A, 1100B).

8. Système d'énergie solaire selon la revendication 7, dans lequel chacun des réflecteurs sans concentration et diffus (700 ; 800) comprend :
- une couche de superstrat (702) ayant un premier coefficient de dilatation thermique ;
- une couche arrière métallique (704) ayant un second coefficient de dilatation thermique qui est supérieur au premier coefficient de dilatation thermique ; et
- une couche adhésive (706) disposée entre la couche de superstrat (702) et la pellicule arrière métallique (704) ;
dans lequel la couche de superstrat (702), la couche arrière métallique (704) et la couche adhésive (706) sont stratifiées conjointement à une première température et refroidies à une seconde température inférieure à la première température de sorte que la couche de superstrat (702), la couche arrière métallique (704) et la couche adhésive (706) forment un réflecteur convexe (700 ; 800) après refroidissement à la seconde température.

9. Système d'énergie solaire selon la revendication 7, dans lequel chacun des réflecteurs non-concentrateurs et diffus (800) comprend une couche réfléchissante (802) ayant une texture de surface anisotrope configurée pour réfléchir de façon diffuse des rayons de lumière incidents sur celle-ci.

10. Système d'énergie solaire selon la revendication 7, dans lequel chacun des réflecteurs non-concentrateurs et diffus (1000) comprend :
- une couche de superstrat (1002) ayant une surface avant (1012) et une surface arrière (1014), un pointillé de fond (1016) étant formé sur la surface arrière (1014), la couche de superstrat (1002) ayant un premier indice de réfraction ;
- une couche réfléchissante (1006) ; et
- une couche adhésive (1004) disposée entre la couche de superstrat (1002) et la couche réfléchissante (1006), la couche adhésive (1004) ayant un second indice de réfraction qui est différent du premier indice de réfraction.

11. Système d'énergie solaire selon la revendication 7, dans lequel chacun des réflecteurs non-concentrateurs et diffus (1100A, 1100B) comprend une couche réfléchissante à sélection spectrale (1106) avec une dépendance vis-à-vis de l'angle incident.

12. Système d'énergie solaire selon la revendication 11, dans lequel une bande de réflexion de la couche réfléchissante à sélection spectrale (1106) est d'approximativement 700 à 1 350 nanomètres à un angle incident sensiblement normal, approximativement 600 à 1 250 nanomètres à un angle incident de 45 degrés par rapport à la normale, approximativement 500 à 1 150 nanomètres à un angle incident de 60 degrés par rapport à la normale, et d'environ 400 à 1 000 nanomètres à un angle incident de 70 degrés par rapport à la normale.

13. Système d'énergie solaire selon la revendication 11, dans lequel chacun des réflecteurs non-concentrateurs et diffus (1100A) comprend en outre une couche de coloration noire (1116) disposée derrière la couche réfléchissante à sélection spectrale (1106), la couche de coloration noire (1116) étant configurée pour absorber l'énergie de rayons de lumière transmis à travers la couche réfléchissante à sélection spectrale (1106) ou dans lequel chacun des réflecteurs non-concentrateurs et diffus (1100A) comprend en outre une couche de coloration blanche (1116) disposée derrière la couche réfléchissante à sélection spectrale (1106), la couche de coloration blanche (1116) étant configurée pour réfléchir de façon diffuse des rayons de lumière transmis à travers la couche réfléchissante à sélection spectrale (1106).

14. Système d'énergie solaire selon la revendication 1, dans lequel chacun des réflecteurs (1100A, 1100B) comprend :
- une couche arrière (1108) ayant une surface arrière disposée opposée à une surface arrière d'un module photovoltaïque (106) dans une rangée de modules adjacente ; et
- une couche émissive (1115) stratifiée sur la surface arrière de la pellicule arrière (1108), la couche émissive (1115) ayant une émissivité supérieure ou égale à 0,6.

15. Système d'énergie solaire, comprenant une pluralité de modules photovoltaïques (1306) divisés en une pluralité de groupes, **caractérisé**
- **en ce que** les modules photovoltaïques (1306) dans chacun de la pluralité de groupes sont raccordés électriquement en parallèle les uns aux autres, dans lequel chaque module photovoltaïque (1306) comporte: une pluralité de cellules photovoltaïques (602) agencées en une pluralité de rangées de cellules (606), les cellules photovoltaïques (602) dans chaque rangée de cellules (606) étant raccordées électriquement en parallèle les unes aux autres, et la pluralité de rangées de cellules (606) étant raccordées électriquement en série les unes aux autres ;
- par une pluralité d'onduleurs basse tension (1304), chaque onduleur basse tension (1304) étant raccordé électriquement à un groupe correspondant de modules photovoltaïques pour recevoir une entrée de courant continu générée par les modules photovoltaïques (1306) dans le groupe correspondant ; et
- par une pluralité de circuits sélecteurs (1310), chaque circuit sélecteur (1310) étant raccordé électriquement entre un groupe correspondant de modules photovoltaïques et un onduleur basse tension (1304), les circuits sélecteurs (1310) étant en outre connectés les uns aux autres de sorte que l'entrée de courant continu de chaque onduleur basse tension (1304) puisse être réacheminée vers un ou plusieurs des autres onduleurs basse tension (1304) en cas de panne d'un onduleur (1304).
